# EUROPEAN PATENT SPECIFICATION

(11) **EP 2 419 810 B1**
(45) Date of publication and mention of the grant of the patent: **26.12.2018**
(21) Application number: 10764907.1
(22) Date of filing: 05.04.2010
(51) Int. Cl.: G06F 9/451, G06F 3/0485, G09G 3/34, G09G 5/14, G06F 3/14

(54) **SYSTEM AND METHOD FOR SCROLLING A REMOTE APPLICATION**
SYSTEM UND VERFAHREN ZUM SCROLLEN DURCH EINE ENTFERNTE ANWENDUNG
SYSTÈME ET PROCÉDÉ POUR FAIRE DÉFILER UNE APPLICATION DISTANTE

(30) Priority: 15.04.2009 US 169664 P; 15.04.2009 US 169667 P; 24.08.2009 US 546679; 15.04.2009 US 169676 P
(43) Date of publication of application: 22.02.2012
(73) Proprietor: Wyse Technology L.L.C., San Jose, CA 95134 (US)
(72) Inventor: PAHLAVAN, Babak, Palo Alto CA 94301 (US); NICHOLSON, Ronald, H., Jr., Santa Clara CA 95051 (US); MADARAKAL, Nandakumar, Sarun, Kerela 682505 (IN); BARRETO, Daniel, Ernesto, Los Altos, CA 94022 (US)
(74) Representative: Müller-Boré & Partner Patentanwälte PartG mbB
(86) International application number: PCT/US2010/029995
(87) International publication number: WO 2010/120584

(56) References cited:
- US-A- 5 874 960
- US-A1- 2004 239 681
- US-A1- 2007 156 677
- US-A1- 2007 236 470
- US-A1- 2008 155 012
- US-A1- 2009 058 822
- US-B1- 7 293 243

## Description

### FIELD

The subject technology relates in general to computing apparatus and methods, and more particularly to, systems and methods for scrolling a remote application.

### BACKGROUND

A client device may access remotely an application running on a remote server. However, a remote application may be designed for a desktop environment for a large screen, which can make it very difficult for a user at a client device having a small screen to interact with the remote application.

Instead of remotely accessing a desktop application from a client device, the application may be rewritten to run on the client device. However, client devices are typically slower and have limited resources compared with servers (e.g., desktop computer). As a result, rewriting an application on a server to run on a client device can be a huge undertaking requiring a large investment and long development time. For example, it can be very difficult to port existing code from an operating system of a server to a client device (e.g., smartphone). In many cases it is not practical to rewrite an application from scratch to match the native functionality and user interface of a client device.

Accordingly, there is a need for systems and methods that facilitate user interaction, such as scrolling, with an application running on a server from a client device and provide an improved experience for users at the client device.

US 5 874 960 A relates to a method in a computer system for displaying data generated by a shared application on a host computer system on both a host display of the host computer and a shadow display of a shadow computer system. The host computer system has a window manager for managing the windows displayed on the host display. The shadow computer system has a window manager for managing windows displayed on the shadow display.

US 7 293 243 B1 relates to an improved application sharing system and method wherein an application sharing viewing display is modified to increase the likelihood that a viewing user is able to see without scrolling the entirety of a window of interest displayed by a sharing user on a sharing machine.

US 2004/0239681 A1 relates to display of visual content on a client device using server-side rasterization of visual content. Visual content is rendered on a server system, transformed into bitmaps compatible with the display attributes of a client device, and transmitted for display on the client device, allowing the server to perform, in effect, as a remote browser for displaying Web pages, e-mail, e-mail attachments, electronic documents and forms, database queries and results, drawings, presentations, and images at the client device.

### SUMMARY

In one aspect of the disclosure, a system may be provided for communication and for scrolling a remote application. The system may comprise a viewer controller module configured to receive, at the system from a remote server over a remote access connection between the system and the remote server during a remote connection session, an overall content size of a remote application running on the remote server. The viewer controller module may be configured to generate a scrolling command to control a first remote application view at the system of the remote application. The scrolling command may be based on one or more native scrolling gestures, a first display output at the system of the remote application and the overall content size of the remote application. The viewer controller module may be configured to send, from the system to the remote server over the remote access connection, the scrolling command.

In another aspect of the disclosure, a method may be provided for communication and for scrolling a remote application. The method may comprise receiving, at a system from a remote server over a remote access connection between the system and the remote server during a remote connection session, an overall content size of a remote application running on the remote server. The method may comprise generating a scrolling command to control a first remote application view at the system of the remote application. The scrolling command may be based on one or more native scrolling gestures, a first display output at the system of the remote application and the overall content size of the remote application. The method may comprise sending, from the system to the remote server over the remote access connection, the scrolling command.

In yet another aspect of the disclosure, a system may be provided for communication and for scrolling a remote application. The system may comprise means for receiving, at a system from a remote server over a remote access connection between the system and the remote server during a remote connection session, an overall content size of a remote application running on the remote server. The system may comprise means for generating a scrolling command to control a first remote application view at the system of the remote application. The scrolling command may be based on one or more native scrolling gestures, a first display output at the system of the remote application and the overall content size of the remote application. The system may comprise means for sending, from the system to the remote server over the remote access connection, the scrolling command.

In yet another aspect of the disclosure, a machine-readable medium may be encoded with instructions executable by a processing system to perform a method for communication and for scrolling a remote application. The instructions may comprise code for receiving, at a system from a remote server over a remote access connection between the system and the remote server during a remote connection session, an overall content size of a remote application running on the remote server. The instructions may comprise code for generating a scrolling command to control a first remote application view at the system of the remote application. The scrolling command may be based on one or more native scrolling gestures, a first display output at the system of the remote application and the overall content size of the remote application. The instructions may comprise code for sending, from the system to the remote server over the remote access connection, the scrolling command.

In yet another aspect of the disclosure, a system may be provided for communication and for scrolling a local application based on one or more commands from a remote client device. The system may comprise an agent module configured to send, from the system to a remote client device over a remote access connection between the system and the remote client device during a remote connection session, an overall content size of a local application running on a server. The agent module may be configured to receive, at the system from the remote client device over the remote access connection, a remote scrolling command to control a first remote application view at the remote client device of the local application. The remote scrolling command may be based on one or more native scrolling gestures, a first display output at the remote client device of the local application and the overall content size of the local application. The agent module may be configured to facilitate generating a local scrolling command based on the remote scrolling command.

In yet another aspect of the disclosure, a method may be provided for communication and for scrolling a local application based on one or more commands from a remote client device. The method may comprise sending, from a system to a remote client device over a remote access connection between the system and the remote client device during a remote connection session, an overall content size of a local application running on a server. The method may comprise receiving, at the system from the remote client device over the remote access connection, a remote scrolling command to control a first remote application view at the remote client device of the local application. The remote scrolling command may be based on one or more native scrolling gestures, a first display output at the remote client device of the local application and the overall content size of the local application. The method may comprise facilitating generating a local scrolling command based on the remote scrolling command.

In yet another aspect of the disclosure, a system may be provided for communication and for scrolling a local application based on one or more commands from a remote client device. The system may comprise means for sending, from a system to a remote client device over a remote access connection between the system and the remote client device during a remote connection session, an overall content size of a local application running on a server. The system may comprise means for receiving, at the system from the remote client device over the remote access connection, a remote scrolling command to control a first remote application view at the remote client device of the local application. The remote scrolling command may be based on one or more native scrolling gestures, a first display output at the remote client device of the local application and the overall content size of the local application. The system may comprise means for facilitating generating a local scrolling command based on the remote scrolling command.

In yet another aspect of the disclosure, a machine-readable medium may be encoded with instructions executable by a processing system to perform a method for communication and for scrolling a local application based on one or more commands from a remote client device. The instructions may comprise code for sending, from a system to a remote client device over a remote access connection between the system and the remote client device during a remote connection session, an overall content size of a local application running on a server. The instructions may comprise code for receiving, at the system from the remote client device over the remote access connection, a remote scrolling command to control a first remote application view at the remote client device of the local application. The remote scrolling command may be based on one or more native scrolling gestures, a first display output at the remote client device of the local application and the overall content size of the local application. The instructions may comprise code for facilitating generating a local scrolling command based on the remote scrolling command.

It is understood that other configurations of the subject technology will become readily apparent to those skilled in the art from the following detailed description, wherein various configurations of the subject technology are shown and described by way of illustration. As will be realized, the subject technology is capable of other and different configurations and its several details are capable of modification in various other respects, all without departing from the scope of the subject technology. Accordingly, the drawings and detailed description are to be regarded as illustrative in nature and not as restrictive.

### BRIEF DESCRIPTION OF THE DRAWINGS

FIG. 1A illustrates an example of a display on a client device during a remote access session with a remote server.
FIG. 1B illustrates an example of a web browser running on a server.
FIGS. 1C to 1E illustrate examples of different portions of the web browser displayed on a client device.
FIG. 2 is a conceptual block diagram of a computer network according to certain aspects of the present disclosure.
FIG. 3 is a conceptual block diagram of a server according to certain aspects of the present disclosure.
FIG. 4 is a conceptual block diagram of a client device according to certain aspects of the present disclosure.
FIG. 5A is a conceptual block diagram of a server according to certain aspects of the present disclosure.
FIG. 5B is a conceptual block diagram of a client according to certain aspects of the present disclosure.
FIG. 6 illustrates an example of a remote access connection.
FIG. 7 illustrates a composite view at the client device according to certain aspects of the present disclosure.
FIG. 8A illustrates an example of a local GUI according to certain aspects of the present disclosure.
FIG. 8B illustrates an example of a graphical keyboard according to certain aspects of the present disclosure.
FIG. 9 illustrates a display at the client device according to certain aspects of the present disclosure.
FIG. 10 is a conceptual block diagram of server and client remote access modules according to certain aspects of the present disclosure.
FIG. 11 illustrates an example of a plurality of connections between the server and the client device.
FIG. 12 is a block diagram that illustrates an exemplary computing system in accordance with certain embodiments of the present disclosure.

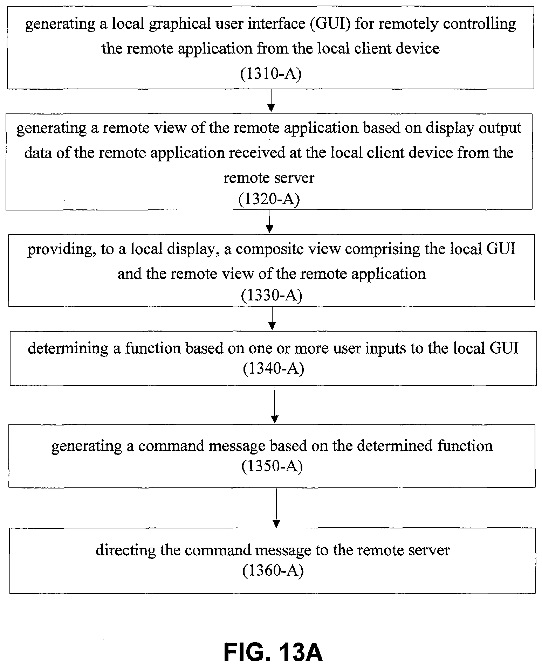

FIG. 13A illustrates an example of an operation of a system according to one aspect of the present disclosure.

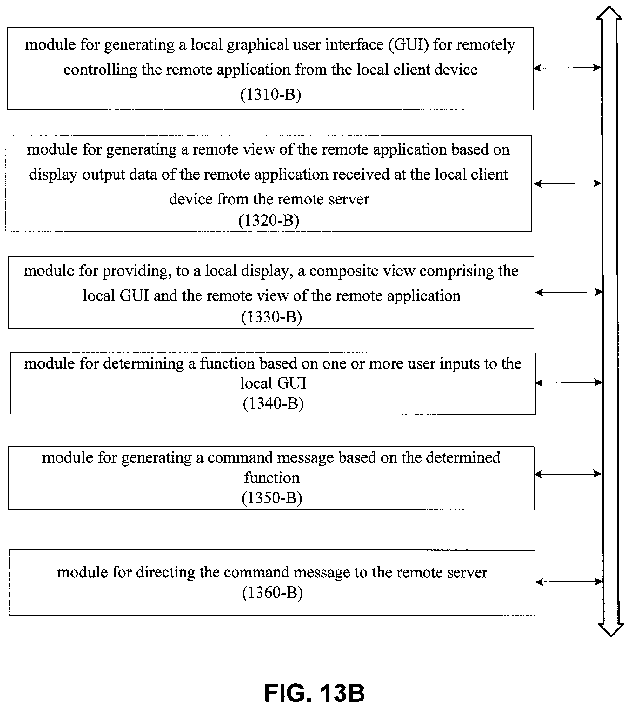

FIG. 13B illustrates an example of a configuration of an apparatus according to one aspect of the present disclosure.
FIG. 14A illustrates an example of a remote application displayed at a client device.
FIG. 14B illustrates an example of a graphical keyboard displayed at the client device for entering text for the remote application.
FIGS 15A illustrates an example of an area of the display output of a remote application that is displayed in a remote application view of a client device.
FIG. 15B illustrates an example in which the area of the display output in FIG. 15A is scrolled to the right.
FIG. 16A illustrates an example in which a dialog box or window is located outside the area of the display output displayed in the remote application view.
FIG. 16B illustrates an example in which the area of the display output displayed in the remote application view is scrolled to the right to encompass the dialog box or window.
FIG. 17 illustrates an example in which a portion of an object of a remote application is displayed at a client device.
FIG. 18 illustrates an example in which a remote application view of the client device is scrolled to the right to reveal the entire object of the remote application.
FIG. 19A illustrates an example in which a portion of an object is located within an area of the display output displayed in the remote application view.
FIG. 19B illustrates an example in which the entire object is located within the area of the display output displayed in the remote application view.
FIG. 20 illustrates an example of a local GUI at a client device listing applications that are available at a remote server.
FIG. 21 illustrates an example of a remote desktop displayed at a client device.
FIG. 22 is a conceptual block diagram of an agent module according to certain aspects of the present disclosure.

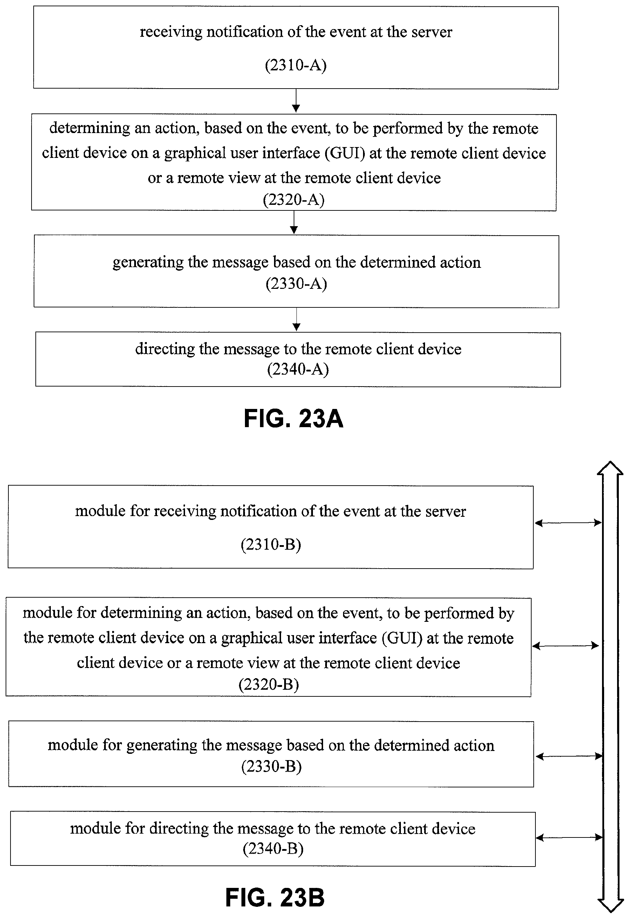

FIG. 23A illustrates an example of an operation of an apparatus according to one aspect of the present disclosure.
FIG. 23B illustrates an example of a configuration of an apparatus according to one aspect of the present disclosure.

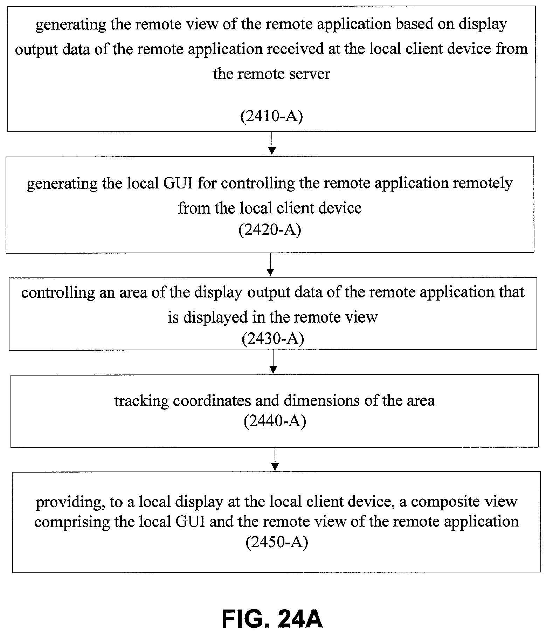

FIG. 24A illustrates an example of an operation of an apparatus according to one aspect of the present disclosure.

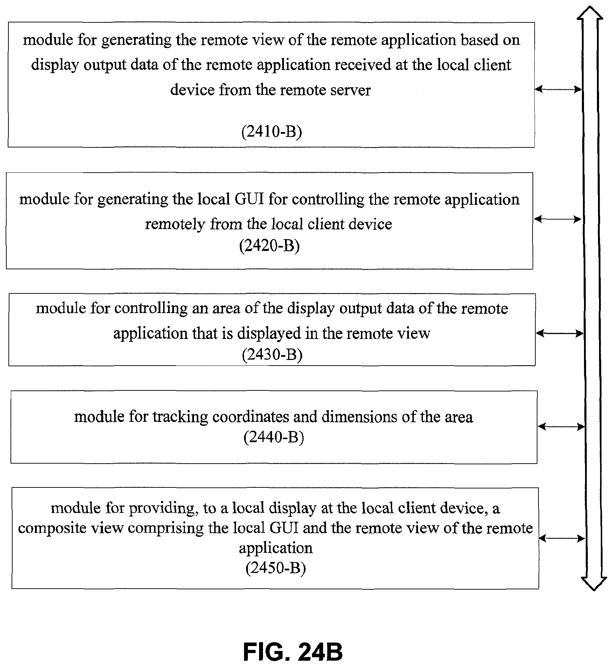

FIG. 24B illustrates an example of a configuration of an apparatus according to one aspect of the present disclosure.
FIGS. 25A and 25B illustrate exemplary views at a client device of a remote application running on a server, according to various aspects of the present disclosure.
FIG. 26 illustrates a composite view at the client device with adaptive scrollbars, according to one aspect of the present disclosure.
FIG. 27A illustrates an exemplary method for scrolling a remote application, in accordance with one aspect of the present disclosure.
FIG. 27B illustrates an example of a configuration of an apparatus, in accordance with one aspect of the present disclosure.
FIG. 28A illustrates an exemplary method for scrolling a remote application, in accordance with one aspect of the present disclosure.
FIG. 28B illustrates an example of a configuration of an apparatus, in accordance with one aspect of the present disclosure.
FIG. 29 illustrates an exemplary method for providing the overall content size of a local application running on a server, in accordance with one aspect of the present disclosure.

### DETAILED DESCRIPTION

The detailed description set forth below is intended as a description of various configurations of the subject technology and is not intended to represent the only configurations in which the subject technology may be practiced. The appended drawings are incorporated herein and constitute a part of the detailed description. The detailed description includes specific details for the purpose of providing a thorough understanding of the subject technology. However, it will be apparent to those skilled in the art that the subject technology may be practiced without these specific details. In some instances, well-known structures and components are shown in block diagram form in order to avoid obscuring the concepts of the subject technology. Like components are labeled with identical element numbers for ease of understanding.

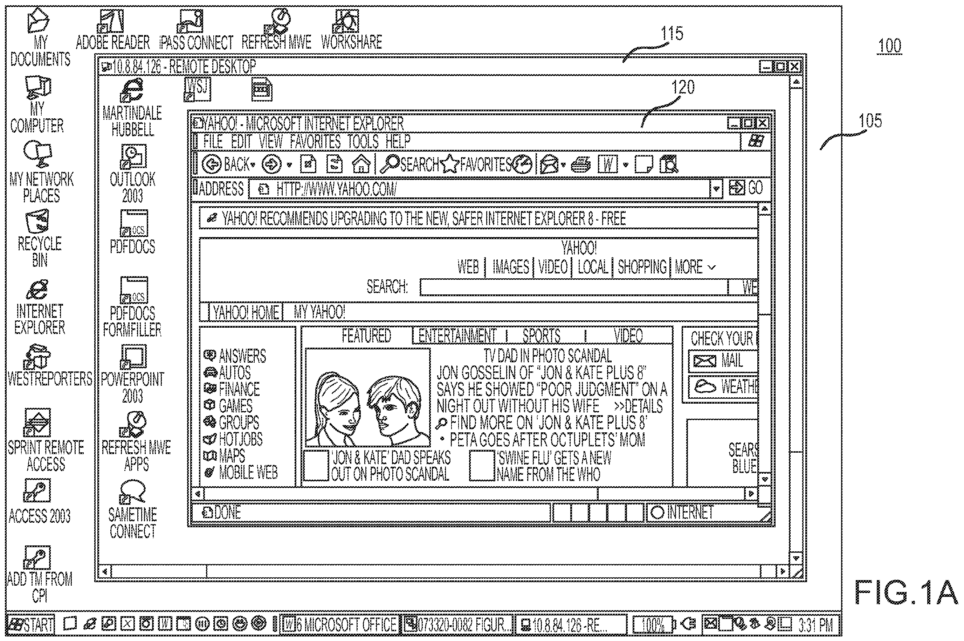

FIG. 1A shows an example of a display 100 at a client device with a large screen during a remote access session with a server. The display 100 includes the local desktop 105 of the client device, a remote view window 115 showing an image of a remote desktop 115 and a remote web browser application 120 running on the server. The image of the remote desktop 115 and remote application 120 are based on display output data of the remote desktop 115 and remote application 120 from the server.

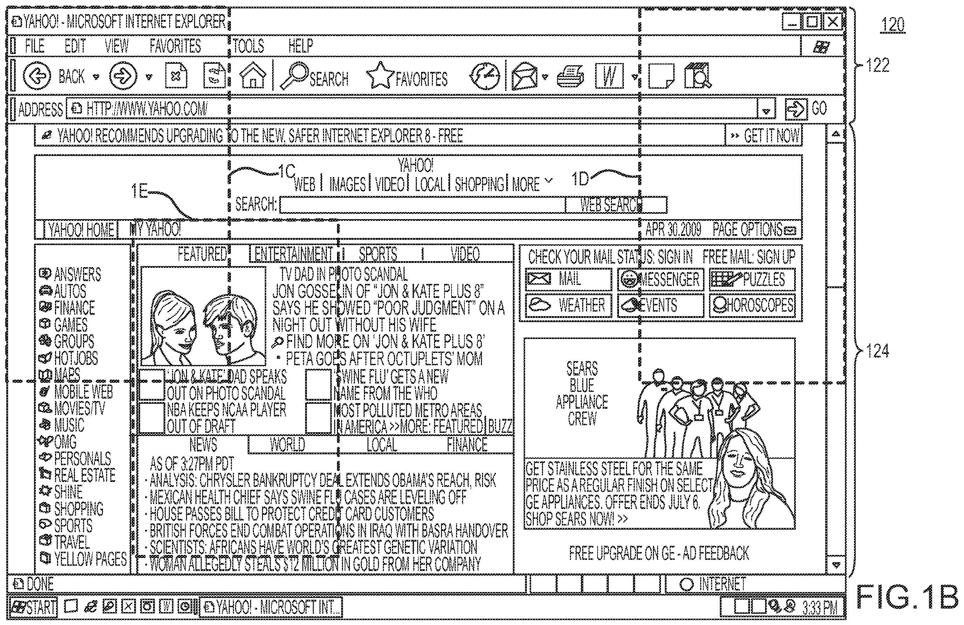

FIG. 1B shows an enlarged view of the remote web browser application 120. The remote web browser application 120 includes a GUI 122 (e.g., toolbars) and a window 124 for displaying web content. The GUI 122 is designed to be viewed on a large display. As a result, it can be very different for a user at a client device with a small display to remotely interact with the remote web browser 120. For example, if the image of the entire remote web browser application 120 is displayed on a client device with a small display, then the GUI 122 is greatly reduced in size making it difficult for the user to view the GUI 122 and select graphical control objects in the GUI 122.

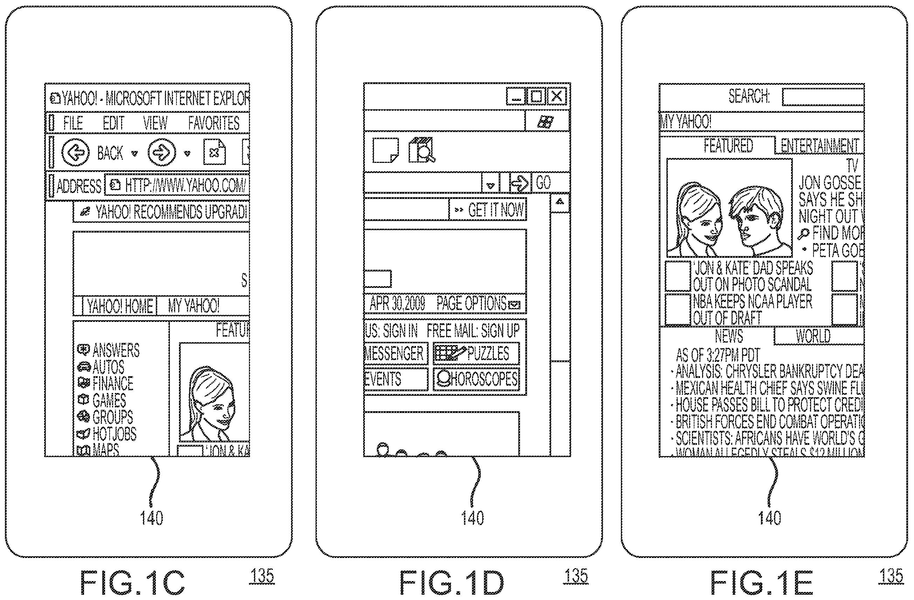

If the user at the client device zooms in on a portion of the remote web browser application 120 to enlarge that portion for viewing on a client device with a small screen (e.g., mobile phone), then the user needs to constantly manipulate the remote view by adjusting the zoom and scrolling to view different portions of the web browser application 120. FIG. 1C shows an example of a client device 135 in which a portion of the remote web browser application 120 has been zoomed in for viewing on the display 140 of the client device 135 (e.g., smartphone). In this example, only a portion of the GUI 122 is visible. As a result, the user at the client device has to adjust the zoom and/or scroll the remote view on the display 140 to view the GUI 122. FIG. 1D shows another example in which a different portion of the GUI 122 is visible on the display 140. FIG. 1E shows an example in which the GUI 122 is not visible at all on the display 140. The different portions of the web browser application 120 displayed in FIGS. 1C to 1E are shown in FIG. 1B in dashed boxes. Thus, interacting with a remote application running on a server from a client device (e.g., smartphone) can be very cumbersome and difficult.

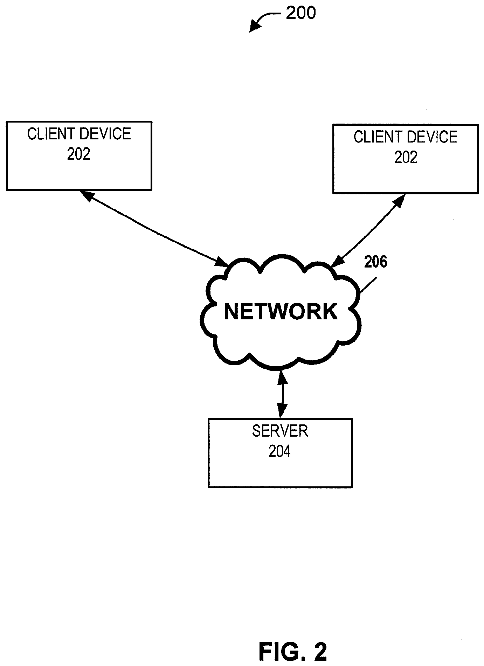

FIG. 2 illustrates a simplified diagram of a system 200 in accordance with an aspect of the present disclosure. The system 200 may include one ore more remote client devices 202 in communication with a server computing device 204 (server) via a network 206. In one aspect, the server 204 is configured to allow remote sessions (e.g., remote desktop sessions) wherein users can access applications and files on the server 204 by logging onto the server 204 from a client device 202. Such a connection may be established using any of several well-known techniques such as the Remote Desktop Protocol (RDP) on a Windows-based server.

By way of illustration and not limitation, in one aspect of the disclosure, stated from a perspective of a server side (treating a server as a local device and treating a client device as a remote device), a server application is executed (or runs) at a server 204. While a remote client device 202 may receive and display a view of the server application on a display local to the remote client device 202, the remote client device 202 does not execute (or run) the server application at the remote client device 202. Stated in another way from a perspective of the client side (treating a server as remote device and treating a client device as a local device), a remote application is executed (or runs) at a remote server 204.

By way of illustration and not limitation, a client device 202 can represent a computer, a mobile phone, a laptop computer, a thin client device, a personal digital assistant (PDA), a portable computing device, or a suitable device with a processor. In one example, a client device 202 is a smartphone (e.g., iPhone, Android phone, Blackberry, etc.). In certain configurations, a client device 202 can represent an audio player, a game console, a camera, a camcorder, an audio device, a video device, a multimedia device, or a device capable of supporting a connection to a remote server. In one example, a client device 202 can be mobile. In another example, a client device 202 can be stationary. According to one aspect of the disclosure, a client device 202 may be a device having at least a processor and memory, where the total amount of memory of the client device 202 could be less than the total amount of memory in a server 204. In one example, a client device 202 does not have a hard disk. In one aspect, a client device 202 has a display smaller than a display supported by a server 204. In one aspect, a client device may include one or more client devices.

In one aspect, a server 204 may represent a computer, a laptop computer, a computing device, a virtual machine (e.g., VMware® Virtual Machine), a desktop session (e.g., Microsoft Terminal Server), a published application (e.g., Microsoft Terminal Server) or a suitable device with a processor. In one aspect, a server 204 can be stationary. In another aspect, a server 204 can be mobile. In certain configurations, a server 204 may be any device that can represent a client device. In one aspect, a server 204 may include one or more servers.

In one example, a first device is remote to a second device when the first device is not directly connected to the second device. In one example, a first remote device may be connected to a second device over a communication network such as a Local Area Network (LAN), a Wide Area Network (WAN), and/or other network.

When a client device 202 and a server 204 are remote with respect to each other, a client device 202 may connect to a server 204 over a network 206, for example, via a modem connection, a LAN connection including the Ethernet or a broadband WAN connection including DSL, Cable, T1, T3, Fiber Optics, Wi-Fi, or a mobile network connection including GSM, GPRS, 3G, WiMax or other network connection. A network 206 can be a LAN network, a WAN network, a wireless network, the Internet, an intranet or other network. A network 206 may include one or more routers for routing data between client devices and/or servers. A remote device (e.g., client device, server) on a network may be addressed by a corresponding network address, such as, but not limited to, an Internet protocol (IP) address, an Internet name, a Windows Internet name service (WINS) name, a domain name or other system name. These illustrate some examples as to how one device may be remote to another device. But the subject technology is not limited to these examples.

According to certain aspects of the present disclosure, the terms "server" and "remote server" are generally used synonymously in relation to a client device, and the word "remote" may indicate that a server is in communication with other device(s), for example, over a network connection(s).

According to certain aspects of the present disclosure, the terms "client device" and "remote client device" are generally used synonymously in relation to a server, and the word "remote" may indicate that a client device is in communication with a server(s), for example, over a network connection(s).

In one aspect of the disclosure, a "client device" may be sometimes referred to as a client or vice versa. Similarly, a "server" may be sometimes referred to as a server device or vice versa.

In one aspect, the terms "local" and "remote" are relative terms, and a client device may be referred to as a local client device or a remote client device, depending on whether a client device is described from a client side or from a server side, respectively. Similarly, a server may be referred to as a local server or a remote server, depending on whether a server is described from a server side or from a client side, respectively. Furthermore, an application running on a server may be referred to as a local application, if described from a server side, and may be referred to as a remote application, if described from a client side.

In one aspect, devices placed on a client side (e.g., devices connected directly to a client device(s) or to one another using wires or wirelessly) may be referred to as local devices with respect to a client device and remote devices with respect to a server. Similarly, devices placed on a server side (e.g., devices connected directly to a server(s) or to one another using wires or wirelessly) may be referred to as local devices with respect to a server and remote devices with respect to a client device.

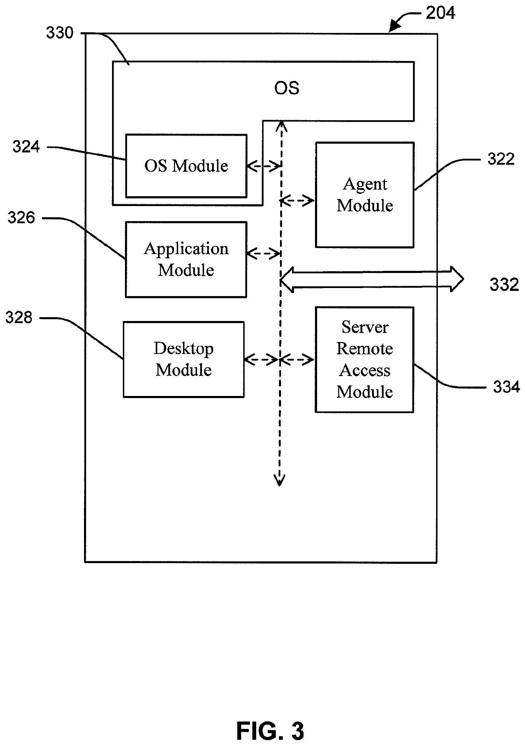

FIG. 3 illustrates a simplified block diagram of a server 204 in accordance with an aspect of the present disclosure. The server 204 comprises an agent module 322, an OS module 324, one or more application modules 326, a desktop module 328, a server remote access module 334 and an operating system (OS) 330 in communication with the modules. In one aspect, the OS module 324 can be a part of the OS 330. The server 204 is communicatively coupled with the network 206 via a network interface 332. The modules can be implemented in software, hardware and/or a combination of both. Features and functions of these modules according to various aspects are further described in the present disclosure.

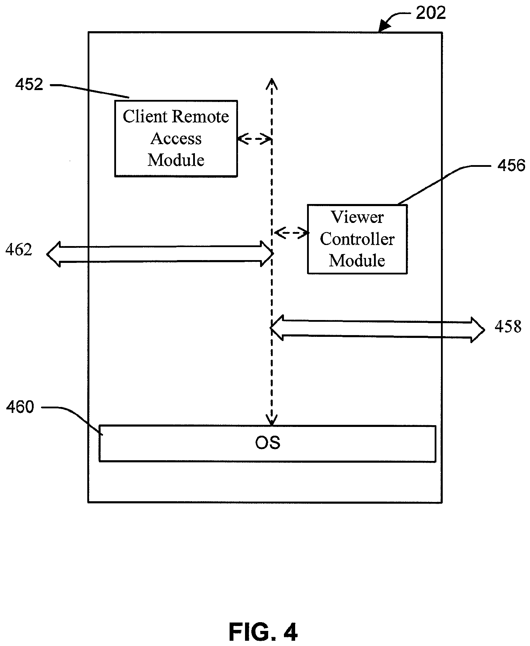

FIG. 4 illustrates a simplified block diagram of a client device 202 in accordance with an aspect of the present invention. The client device 202 comprises a viewer controller (VC) module 456, a client remote access module 452 and an operating system (OS) 460 in communication with the modules. The modules are further in communication with various user interface devices (not shown in FIG. 4) via a human interface devices (HID) connection 458. The user interface devices may include one or more output devices (e.g., one or more of a display, a speaker, or other audio, image or video output devices) and one or more input devices (e.g., one or more of a keyboard, a mouse, a trackball, a microphone, a stylus, a touch screen, a touch pad, a pen, a tablet, or other audio, image or video input devices). The modules are also in communication with the network 206 via a network connection 462. The modules can be implemented in software, hardware and/or a combination of both. Additional features and functions of these modules according to various aspects of the present disclosure are further described in the disclosure.

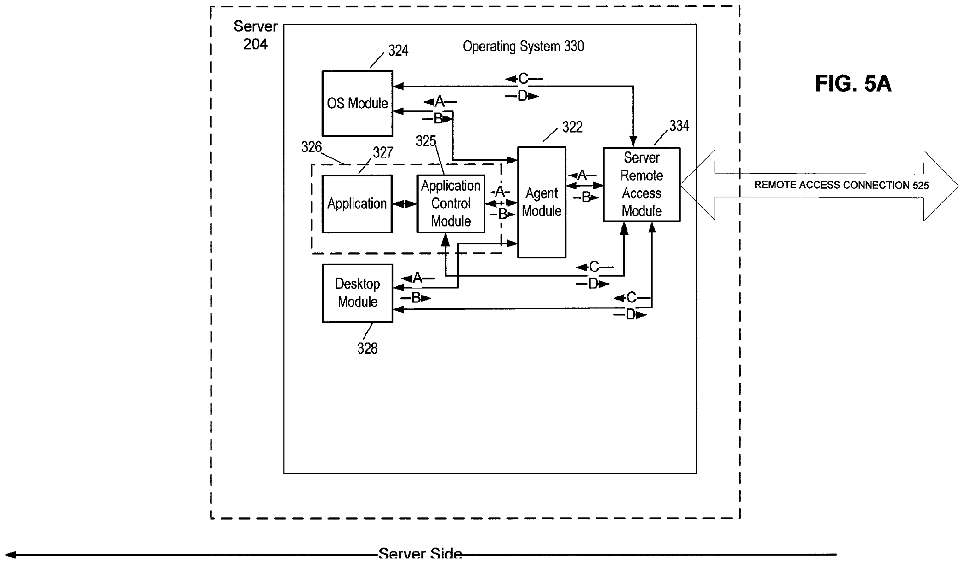

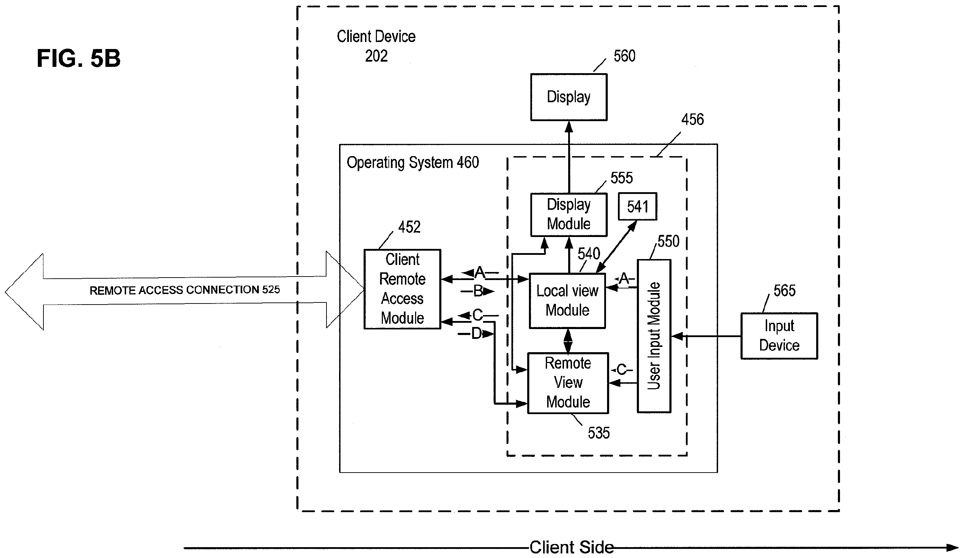

FIGS. 5A and 5B are conceptual block diagrams illustrating a server 204 and a client device 202 according to an aspect of the disclosure.

Referring to FIG. 5A, the server 204 may comprise the server remote access module 334 and the agent module 322. The server remote access module 334 is configured to establish a remote access connection 525 with the client device 202 to provide the client device 202 with remote access to a desktop and/or applications running on the server 204. The server remote access module 334 may comprise a remote access application and may communicate with the client device 202 over a network 206 based on a remote access protocol (e.g., RDP/ICA), other protocols or a combination of protocols. Remote access applications allow a user at a client device to remotely access a desktop and/or application running on a server. Examples of remote access applications include, but are not limited to, the Microsoft® Remote Desktop Protocol (RDP) application and the Citrix® Independent Computing Architecture (ICA) application.

The server remote access module 334 is also configured to receive command messages from the client device 202 and communicate the received command messages to the agent module 322. The agent module 322 may be configured to control a desktop and/or application running on the server 204 based on the received command messages, as described further below.

The server 204 further comprises an application module 326, the desktop module 328 and the OS module 324. The application module 326 comprises an application 327 and an application control module 325. An application 327 may include one or more applications. The application 327 may include, for example, a web browser application, a word processing application, a spreadsheet application, a game application, an audio application, and/or other applications. The application 327 may also include applications for rendering multi-media content including, for example, Adobe® Acrobat, Microsoft® Silverlight, and/or other applications. In one example, the application 327 is executed (or runs) at the server 204, and the client device 202 does not execute (or run) the application 327 locally at the client device 202.

An application control module 325 may include one or more application control modules. The application control module 325 may be configured to control the application 327 based on commands from the agent module 322. The application control module 325 may comprise one or more ActiveX controllers for controlling Windows-based applications or other types of controller. The application control module 325 may also control the applications based on user inputs received by the remote access module 334 from the client device 202. The user inputs may comprise pointer inputs, keyboard inputs and/or other inputs. The application control module 325 may also control the applications based on events generated by the application 327 or the OS 330.

The desktop module 328 may be configured to generate a desktop that provides a GUI for allowing a user to select and launch applications on the server 204, manage files, and configure certain features of the operating system 330. The GUI may be a server-based GUI presented by the agent module 322. Alternatively, the GUI may be controlled by the agent module 322 and displayed natively on the client device. The desktop may display icons representing different applications that can be launched on the server 204, in which a user can select an application by moving a pointer to the corresponding icon and double clicking on the icon. The OS module 324 may be configured to communicate certain OS events to the agent module 322 and the server remote access module 334, as described further below.

The server 204 further comprises the operating system 330, which may manage and provide communication to and receive communication from the modules and application shown in FIG. 5A. The operating system 330 may also manage multiple remote user sessions allowing multiple client devices to remotely access the server 204. The operating system 330 may include Microsoft® Windows, Linux, Unix, Mac OS or another operating system. Although the server remote access module 334 is shown separately from the operating system 330, the server remote access module 334 may be considered part of the operating system 330. For example, the remote access module 334 may comprise an RDP application that comes pre-installed on the server 204 as part of Microsoft® Windows.

Referring now to FIG. 5B, the client device 202 may comprise the client remote access module 452 and the viewer controller module 456. The client remote access module 452 may be configured to communicate with the server 204 over a network 206 to remotely access a desktop and/or applications running on the server 204. The client remote access module 452 may communicate with the server remote access module 334 based on a remote access protocol (e.g., RDP/ICA), other protocols or a combination of protocols. In one aspect, the client remote access module 452 may be configured to receive display output data of a desktop and/or application running on the server 204 from the server remote access module 334 over a network 206.

In one aspect of the disclosure, display output data may comprise visual/audio information that a user located at a server 204 would have seen on a display at the server (e.g., a "virtual" display) and/or would have heard from an audio output such as a speaker at the server (e.g., a "virtual" speaker). In one aspect, the display output data may comprise an image (e.g., bitmap) and/or drawing commands of the display output of a desktop and/or application running on the server 204. In one aspect, drawing commands provide instructions or information to a display system as to what is to be drawn on a display. The instructions or information may include, for example and without limitation, the location, texture, geometry, shading, light intensity, or color, or any combination therein, of a pixel or group of pixels of the display. In some aspects, a drawing command corresponds to multiple pixels. Still in some aspects, a drawing command corresponds to a single pixel of a display. In some aspects, drawing commands may include raster operations. In one aspect of the disclosure, the phrase "display output data" may be sometimes referred to as "display data", "display output" or vice versa.

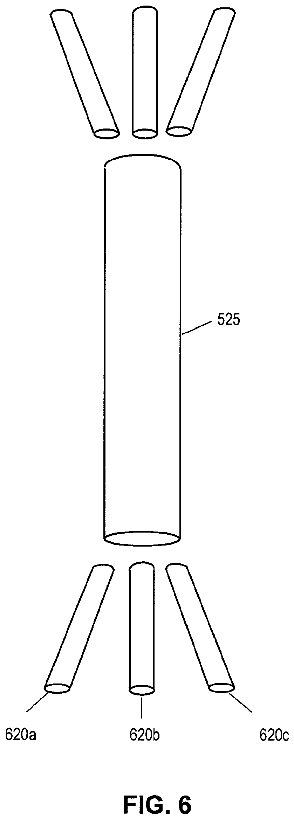

The client remote access module 452 may be configured to send user inputs to the server remote access module 334 over a network 206. The user inputs may comprise pointer inputs, keyboard inputs and/or other types of input. The client remote access module 452 may also be configured to send command messages to the server remote access module 334, which are described in further detail below. The remote access connection 525 between the server 204 and client device 202 may comprise a plurality of virtual channels for communicating different types of data. For example, a RDP connection may include different virtual channels for display output data and user inputs. FIG. 6 illustrates an example of the remote access connection 525 comprising multiple virtual channels 620a to 620c.

The viewer controller module 456 may comprise a remote view module 535, a local view module 540 and a display module 555. The remote view module 535 may be configured to receive display output data of a desktop and/or application 327 running on the server 204 from the client remote access module 452 and generate a remote view of the display output data of the remote desktop and/or application. In one aspect of the disclosure, the phrase "remote view" may sometimes be referred to as "remote application view" or vice versa. In one aspect of the disclosure, the term "an application" or "a remote application" may refer to an application, a remote application, a desktop, or a remote desktop.

The local view module 540 may be configured to generate a local GUI that allows a user at the client device 202 to remotely control the application 327 running on the server 204. The local view module 540 may generate the local GUI based on a configuration file 541. In one aspect, the file 541 may be generated by the agent module 322 or application module 326 and be sent to the client device 202. The file 541 may fully define the layout, design and logical operation of the local GUI. This would allow the server 204 to update the local GUI in the client device 202 without having to make modifications to the client device 202. The local GUI may provide similar controls as the GUI of the application 327 running on the server 204. The local GUI may include graphical control objects for controlling certain functions of the application 327.

For the example of a web browser application, the graphical control objects of the local GUI may include an address field for entering the address (e.g., URL) of a web page, a refresh button, a go button, and scrollbars. The local GUI is displayed on the local display 560 of the client device 202. A user at the client device 202 may select graphical control objects of the local GUI displayed on the display 560 using an input device 565, for example, a touch screen overlying the display 560. As described further below, the local GUI may be optimized for the display 560 of the client device 202 to provide the user at the client device 202 with a user friendly interface for remotely controlling the application 327 running on the server 204.

The display module 555 may be configured to receive a local GUI from the local view module 540 and a remote application view of a remote desktop and/or a remote application from the remote view module 535 and generate a composite view comprising the local GUI and the remote application view of the remote desktop and/or remote application.

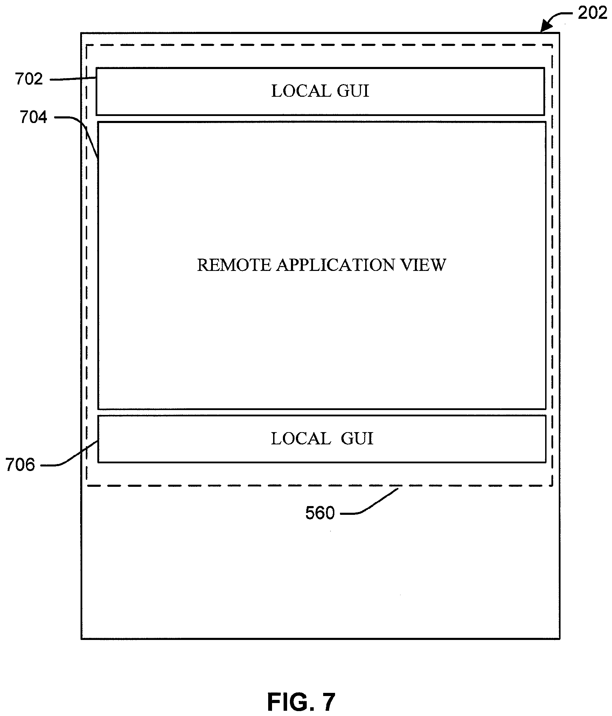

FIG. 7 shows an example of a composite view rendered on a display 560 of a client device 202. In this example, the composite view includes a remote application view 704 for viewing an image of the display output of a remote application 327 running on the server 204. The remote application view is based on the display output data of the remote application 327 received from the server 204. The user may manipulate the image of the remote application 327 shown in the remote application view 704. For example, the remote application view 704 may be responsive to, for example, viewing selections by a user such as zooming factor, the depth of the color palette used, viewing angle (pan and tilt) and so on. The viewing selections may be provided in a GUI. The user may also zoom in and out within the remote application view 704 using any technique. For example, the user may zoom in by sliding two fingers on the display 560 away from each other and zoom out by sliding the fingers on the display towards each other on the display 560, which is currently supported by, for example, iPhone and Palm Pre. User inputs within the remote application view 704 are directed to the remote view module 535.

The composite view may also include a local GUI 702 and 706. The local GUI 702 may display a local header for the application shown in the display area 704. In one aspect, the local header may display an application name based on information received from the server 204. In another aspect, the local header may be locally generated (e.g., a remote session window). In yet another aspect, the local header may display an editable text input area, such as an address field for a web browser. The local GUI 706 may display, for example, local control GUI objects such as a local control GUI toolbar. The local control GUI objects may be based on information received from the remote server 204.

The dimensions and layouts of the remote application view 704 and local GUI 702 and 706 are not limited to the example shown in FIG. 7. The remote application view 704 and local GUI 702 and 706 may have other dimensions and layouts, for example, based on the remote application being accessed by the client device 202.

In one aspect, the local GUI 702 and 706 is not generated from the display output of a remote application 327 running on the server 204. For example, the local GUI 702 and 706 is not an image of the remote application's GUI generated from the display output of the remote application 327 running on the server 204. Instead, the local GUI is locally generated by the local view module 540, for example, based on configuration file 541 (shown in FIG. 5B). Furthermore, the configuration file 541 may be received by the local view module 540 from the application control module 325 or the agent module 322.

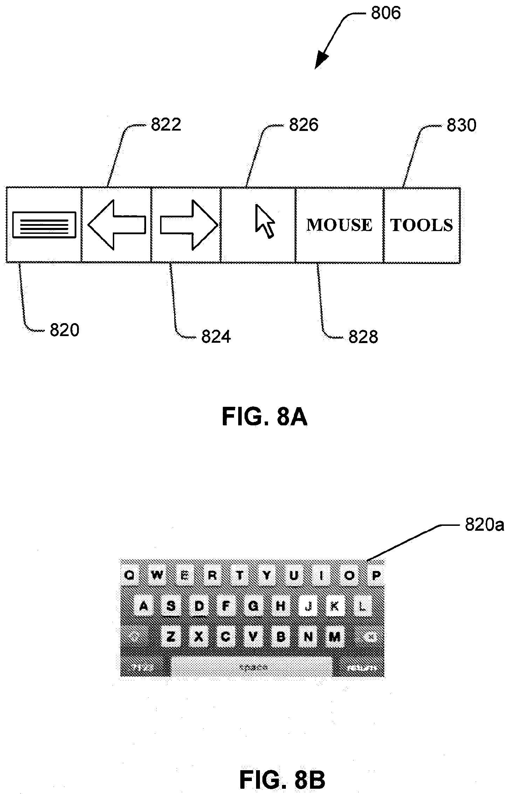

FIG. 8A shows an example of a local control GUI 706. The local control GUI 706 comprises a toolbar 806 including graphical control objects. The graphical control objects may include a keyboard icon 820, a BACK arrow 822, a FORWARD arrow 824, a pointer icon 826, a MOUSE icon 828 and a TOOLS icon 830. When a user selects the keyboard icon 820 (e.g., by touching or tapping), the local view module 540 may change the local control GUI 806 to display a graphical keyboard 820a for the user to enter text (shown in FIG. 8B). The layout details of a keyboard 820a may be provided in a configuration file 541 (shown in FIG. 5B), or may be based on the local GUI tools provided by the OS 460 of the client device 202.

When a user selects the BACK icon 822, the web browser application displays a previously displayed web page. In certain embodiments, the client device 202 may perform this by communicating to the server 204, a control code corresponding to this event. In other embodiments, the client device 202 may include a local cache of previously displayed web pages and may use the cached data to render the previously displayed web page. In a manner similar to the BACK icon 822, the FORWARD icon 824 may be used to render a later viewed web page in the web browser. The pointer icon 826 may allow a user to activate a pointer within the display area of the remote application view 704. The MOUSE icon 828 may allow a user to activate a mouse cursor, which then will invoke mouse movements or mouse clicks, and the TOOLS icon 830 may open further menus containing additional tools, as provided in a configuration file and as provided by the OS 460 of the client device 202.

It will be appreciated by one skilled in the art that, according to one aspect of the disclosure, because the control objects of the local GUI are rendered locally, these objects can be advantageously rendered at the resolution of the local display 560 and can be rendered to have dimensions that can be easily navigated or handled by a user using a finger, a stylus or any other native navigation method(s) provided by the client device 202 (e.g., track-ball, keyboard, etc.). Furthermore, the available display area for the remote application view (e.g., 704) of a remote application can be fully dedicated to content displayed by the remote application by deactivating control GUI objects from the remote application view 704. For example, a web browser executed at a remote server 204 may be displayed in the remote application view 704 after deactivating scrollbars and menu header of the web browser at the server 204. The toolbar and the menu header controls can be provided by the local GUI instead.

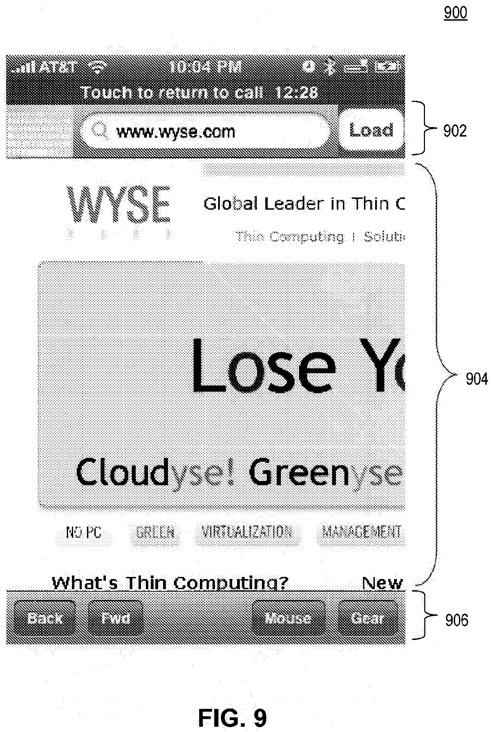

FIG. 9 illustrates an example of a composite view 900 that may be rendered locally on display 560. The composite view 900 comprises the local GUI 902 and 906 and the remote application view 904 of a remote application 327 running on the server 204. In this example, the graphical control objects of the local GUI 902 and 906 include an IP address field, a LOAD button, a BACK button, a FORWARD button, a MOUSE button, and a GEAR button for remotely controlling a web browser application 327 running on the server 204.

Referring to the figures discussed above, various operations of the modules in a server 204 and in a client device 202 are further described below in accordance with one aspect of the disclosure.

Now referring to FIGS. 5B and 7, the client device 202 may further comprise an input device 560 and a user input module 550. In one example, the input device 560 comprises a touch screen overlaying the display 560. In this aspect, the user may enter user inputs within a display area corresponding to the local GUI 702 and 706 by tapping on a desired graphical control object using a finger or stylus. The user input module 550 may send user inputs to the local GUI 702 and 706 for remotely controlling the application 327 to the local view module 540. For the example of a touch screen, when the user touches a display area corresponding to the local GUI 702 and 706, the user input module 550 directs the corresponding user inputs to the local view module 540. The user inputs may comprise coordinates of the location where the user touched the display 560.

The user may also enter user inputs within a remote application view 704 of a remote application 327 on the display 560. For the example of a touch screen, the user may enter user inputs by moving a pointer (not shown) within a display area corresponding to the remote application view 704 of the remote application 327. In this aspect, the user input module 550 directs user inputs within the remote view 704 to the remote view module 535.

In one aspect of the disclosure, the local view module 540 may be configured to generate a command message based on user inputs to the local GUI 702 and 706 for remotely controlling the application 327 and send the command message to the server 204. For the example of a touch screen, the local view module 540 interprets user inputs to the local GUI 702 or 706 and then translates them into corresponding command messages. In this example, a user input may comprise coordinates of a location where the user touches the local GUI 702 or 706 on the display 560 or coordinates of a pointer within the local GUI 702 or 706 controlled by the user, for example, using a pointer device. The local view module 540 can determine which graphical control object is selected by the user based on the graphical control object in the local GUI 702 and 706 corresponding to the coordinates of the user inputs. The local view module 540 determines the function associated with the selected graphical control object and generates a command message for the server 204 with a command to perform the function. For example, if the user touches the local GUI 702 or 706 (e.g., using a finger) at a location corresponding to a refresh button in the local GUI 702 and 706, then the local view module 540 generates a command message for the server 204 to refresh the web page.

In one aspect, the agent module 322 on the server 204 receives the command message and issues a command to the application control module 325 to control the application 327 based on the command message. For example, if the command message is to refresh the web page, then the agent module 322 instructs the application control module 325 to reload the web page on the web browser application 327. Thus, the local view module 540 generates command messages based on user inputs to the local GUI and sends the command messages to the agent module 322 on the server 204, and the agent module 322 controls the remote application based on the received command messages using the application control module 325.

In one aspect, when a local view module 540 receives one or more user inputs directed to, or placed into, a local GUI (e.g., 702 or 706), the local view module 540 may interpret the one or more user inputs, determine (or identify) function(s) corresponding to the one or more user inputs, and generate one or more command messages corresponding to the function(s) by, for example, translating the one or more user inputs into the command message(s). Determining the function of a user input may, for example, include identifying the type of user input (e.g., a text entry, a button selection, a menu selection) and/or determining a function corresponding to the user input (e.g., a text entry for an IP address field, a selection of a BACK button, etc.). For example, when the user input comprises a selection of a button (e.g., refresh button) in the local GUI (e.g., based on coordinates of a user's touch on the display 560), the local view module 540 may determine the function (e.g., refresh current web page) associated with the selected button. In one aspect, these functions are predetermined. The local view module 540 then generates a command message based on the determined function. Some examples of command messages may include, but are not limited to, a command to load a web page from an IP address, display a previously viewed web page, display a later viewed web page, refresh or reload a current web page, stop loading of a webpage, zoom in or out, switch applications, open bookmarks or history (e.g., for a web browser application), and other commands. A command message may comprise a command packet that is transmitted from the client device 202 to the server 204 using various protocols, compressions and encryption schemes. The server 204 may also send commands and status information to the client device 202. For example, the server 204 may send the client device 202 a web page loading status, a redirected URL or keyboard state.

In one aspect, the remote view module 535 may be configured to send user inputs received within the remote application view 704 to the server 204 via the remote access module 452. The user inputs may include pointer inputs comprising coordinates of pointer movements and clicks (e.g., mouse clicks). For example, the user may move a pointer (not shown) within the remote application view 704 using a touch screen, a touch pad, a trackball, a mouse or other pointer input device. In this example, the coordinates of the pointer movements may be transmitted to the server 204. The user inputs may also include keyboard inputs. The user inputs may enter keyboard inputs using a graphical keyboard (e.g., 820a) displayed on the display 560, a keypad or other device. For example, when the user desires to enter text at the location of a pointer or cursor within the remote application view 704, the user may tap on a keyboard icon (e.g., 920) to bring up the graphical keyboard to enter the text. In one aspect, the client device access module 452 may send user inputs comprising pointer inputs (e.g., coordinates of pointer movements) and keyboard inputs to the server 204 using RDP, ICA or other remote access protocol.

In one aspect, the server remote access module 334 may receive the user inputs from the client remote access module 452 over the remote access connection 525 and sends the user inputs to the application control module 325. The application control module 325 interprets the received user inputs and controls the application 327 accordingly.

In one aspect, when an application 327 updates its display output in response to a received command message or user inputs, the remote access module 334 may send updated display output data to the client device 202. The client remote access module 452 receives the updated display output data of the remote application 327 and sends the updated display output data to the remote view module 535. The remote view module 535 then generates an updated image of the display output of the remote application, which is displayed within the remote application view 704 of the display 560.

Aspects of the disclosure allow the user at the client device 202 to remotely view an application running on the server 204 while controlling the application using a local GUI that can be optimized for the display 560 of the client device 202.

An advantage of aspects of the disclosure may be illustrated with reference to FIGS. 9 and 1B. FIG. 9 shows an example of a composite view 900 at the client device 202 for a web browser application running on the server 204, according to an aspect of the disclosure. In this example, the GUI of the application 327 running on the server 204 may be similar to the GUI 122 shown in FIG. 1B, which is designed for a large display. Instead of displaying an image of the remote application's GUI 122 running on the server 204, the local view module 540 advantageously generates and displays a local GUI 902 and 906 for controlling the remote application 327. In one aspect, the local GUI 902 and 906 in FIG. 9 is not based on the display output of the remote application 327. The local GUI 902 and 906 may be optimized for the display 560 of the client device 202. An image of the display output of the remote web browser application 327 is displayed within the remote application view 904 allowing the user at the client device 202 to remotely view the web browser application 327 while remotely controlling the web browser application 327 using the local GUI 902 and 906.

The local GUI 702 and 706 may be designed to have a similar look and feel of a web browser application that is native to the client device (e.g., smartphone). This allows the user at the client device to control a web browser application 327 running on a server 204 in a similar manner as a web browser that is native to the client device (e.g., smartphone), while enjoying the benefits of server-side computing such as increased computing power and resources available on the server 204. For example, a web browser application 327 running on a server has access to plug-in applications on the server 204 for rendering multi-media content. As a result, the plug-in applications do not have to be, for example, loaded onto the client device 202. Another advantage of the local GUI is that it allows a user at the client device 202 to use the application on the server 204 in a user friendly environment without having to extensively rewrite the application port the application to the client device.

In an aspect of the disclosure, the local GUI and the remote application view 704 on the display 560 can be controlled independently. For example, the remote view module 535 may allow the user to adjust the zoom and scroll the image of the remote application 327 within the remote application view 704 while the local view module 540 maintains the size and location of the local GUI 702 and 706 on the display 560. Thus, the local GUI 702 and 706 can remain on the display 560 and be readily accessible to the user while the user manipulates the image of the remote application within the remote application view 704.

In an aspect of the disclosure, the agent module 322 may instruct the application control module 325 to deactivate the GUI of the application 327 so that display output data of the application 327 sent to the client device 202 does not include the GUI of the application. For the example of the web browser 120 running on a server in FIG. 1B, the agent module 322 may deactivate the GUI 122 so that only the display of the web content 124 is sent to the client device 202. This allows a user at the client device 202 to view the web content 124 of the web browser 120 running on the server 204 while controlling the web browser 120 with the local GUI 702 and 706 instead of the remote application's GUI 122 running on the server 204.

The local GUI at the client device 202 is not limited to the example of a web browser application and may be used to remotely control many other applications on the server 204. Examples of applications that may be controlled by local GUIs include word processing applications, spread sheet applications, multi-media player applications, electronic mail applications, and other applications. For the example of a word processing application, the local GUI may include graphical control objects for print, edit, and formatting functions. For a multi-media player, the local GUI may include graphical control objects for play, stop and rewind functions.

In one aspect, the client device 202 may have a plurality of local GUIs for controlling different applications. In this aspect, when the user at the client device 202 remotely launches an application on the server 204, the agent module 322 may determine what type of application was launched. The agent module 322 may then send a message to the client device 202 via the server remote access module 334 indicating the type of application that was launched on the server 204. The client remote access module 452 sends the received message to the local view module 540. The local view module 540 may then select a local GUI from a plurality of local GUIs that matches the type of application indicated by the received message. The agent 322 may also send a configuration file to the client device 202 specifying the local GUI. Thus, the local view module 540 can change the local GUI to adapt to changes in the application running on the server 204.

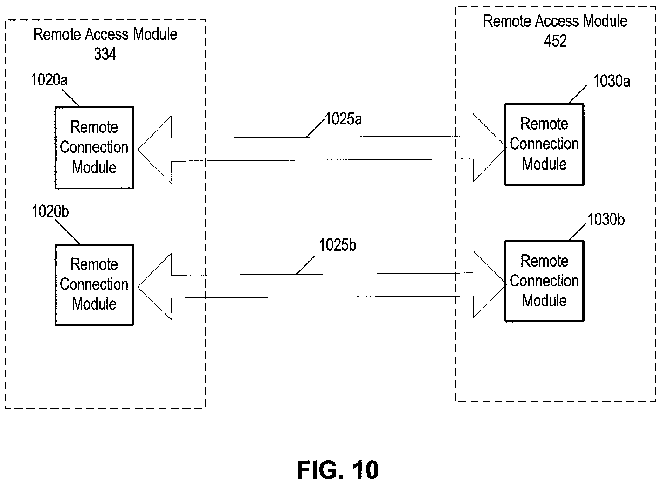

FIG. 10 is a conceptual block diagram illustrating a server remote access module 334 and a client remote access module 452 according to an aspect of the disclosure. In one aspect, a server remote access module 334 comprises first and second server remote connection modules 1020a and 1020b and the client remote access module 452 comprises first and second client remote connection modules 1030a and 1030b. The first server remote connection module 1020a and the first client remote connection module 1030a communicate over connection 1025a. The second server remote connection module 1020b and the second client remote connection module 1030b communicate over connection 1025b. The connections 1025a and 1025b may be established between the server 204 and the client device 202 over a network 206 using different sockets. In this aspect, different types of information may be communicated over the different connections 1025a and 1025b.

In one aspect of the disclosure, the first server remote connection module 1020a and the first client remote connection module 1030a are implemented using a remote access application (e.g., RDP application) for communicating display output data and user inputs between the server 204 and the client device 202. The connection 1025a may comprise a plurality of virtual channels with different virtual channels carrying display output data (e.g., images or audio output of a remote application) and user inputs (e.g., pointer and keyboard inputs from a user at a client device) between the server 204 and the client device 202.

The second server remote connection module 1020b and the second client remote connection module 1030b may be configured to communicate command messages over the connection 1025b. In this aspect, the second client remote connection module 1030b sends command messages from the local view module 540 to the server 204 over the connection 1025b. The second client remote connection module 1020b communicates the received command messages to the agent module 322. In this aspect, the agent module 322 may manage the connection 1025b. In one aspect, the second remote connection module 1020b may be integrated with the agent module 322. Thus, in this aspect, the command messages are communicated over a different connection than the display data and user inputs. An advantage of this aspect is that the command messages may be communicated using a different protocol than the display data and user inputs. For example, the display output data and user inputs may be communicated using a remote access protocol (e.g., RDP) while the command messages are communicated using a different protocol. For example, the command messages may be communicated using a protocol having different encryption, compression and/or security features than the remote access protocol.

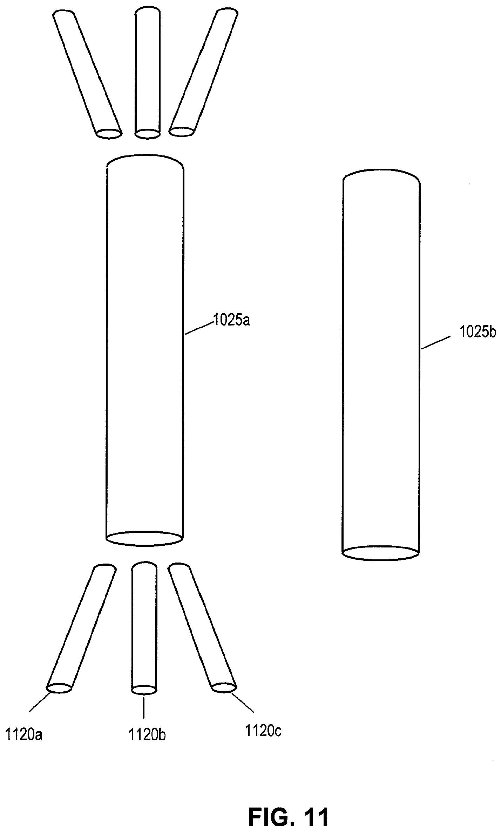

FIG. 11 depicts an example of the connection 1025a comprising multiple virtual channels 1120a to 1120c and the connection 1025b. In this example, the connection 1025a may be based on a remote access protocol (e.g., RDP) for communicating display output data and user inputs on different virtual channels 1120a to 1120c. The connection 1025b is used to communicate command messages. Alternatively, the command messages may be sent over the connection 1025a, in which case the second remote connection modules 1020b and 1030b may be omitted. For example, the command messages may be sent on a virtual channel of the connection 1025a established for command messages. In an aspect, a command message may include a flag or other indicator identifying the message as a command message.

FIGS. 10 and 11 illustrate merely examples of communications between a server and a client device. A server may include one or more remote connection modules (e.g., one, two, three or more), and a client device include one or more remote connection modules (e.g., one, two, three or more).

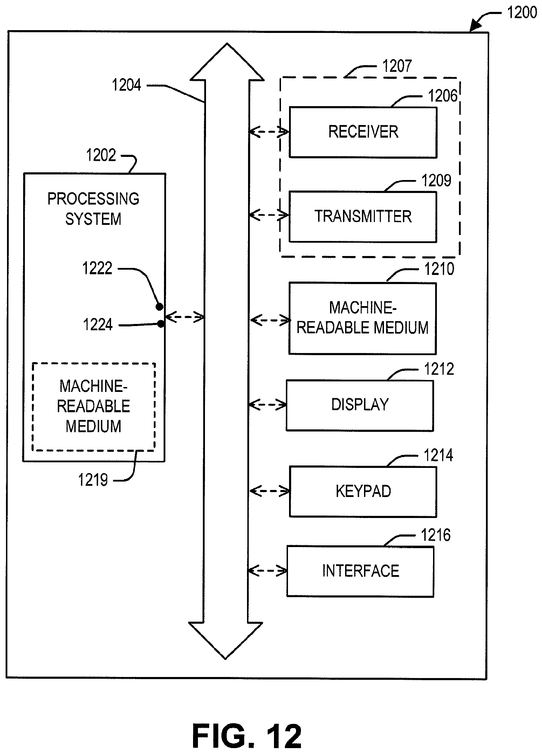

FIG. 12 is a conceptual block diagram illustrating an example of a system.

A system 1200 may be, for example, a client device or a server. The system 1200 includes a processing system 1202. The processing system 1202 is capable of communication with a receiver 1206 and a transmitter 1209 through a bus 1204 or other structures or devices. It should be understood that communication means other than busses can be utilized with the disclosed configurations. The processing system 1202 can generate audio, video, multimedia, and/or other types of data to be provided to the transmitter 1209 for communication. In addition, audio, video, multimedia, and/or other types of data can be received at the receiver 1206, and processed by the processing system 1202.

The processing system 1202 may include a general-purpose processor or a specific-purpose processor for executing instructions and may further include a machine-readable medium 1219, such as a volatile or non-volatile memory, for storing data and/or instructions for software programs. The instructions, which may be stored in a machine-readable medium 1210 and/or 1219, may be executed by the processing system 1202 to control and manage access to the various networks, as well as provide other communication and processing functions. The instructions may also include instructions executed by the processing system 1202 for various user interface devices, such as a display 1212 and a keypad 1214. The processing system 1202 may include an input port 1222 and an output port 1224. Each of the input port 1222 and the output port 1224 may include one or more ports. The input port 1222 and the output port 1224 may be the same port (e.g., a bi-directional port) or may be different ports.

The processing system 1202 may be implemented using software, hardware, or a combination of both. By way of example, the processing system 102 may be implemented with one or more processors. A processor may be a general-purpose microprocessor, a microcontroller, a Digital Signal Processor (DSP), an Application Specific Integrated Circuit (ASIC), a Field Programmable Gate Array (FPGA), a Programmable Logic Device (PLD), a controller, a state machine, gated logic, discrete hardware components, or any other suitable device that can perform calculations or other manipulations of information.

A machine-readable medium can be one or more machine-readable media. Software shall be construed broadly to mean instructions, data, or any combination thereof, whether referred to as software, firmware, middleware, microcode, hardware description language, or otherwise. Instructions may include code (e.g., in source code format, binary code format, executable code format, or any other suitable format of code).

Machine-readable media (e.g., 1219) may include storage integrated into a processing system, such as might be the case with an ASIC. Machine-readable media (e.g., 1210) may also include storage external to a processing system, such as a Random Access Memory (RAM), a flash memory, a Read Only Memory (ROM), a Programmable Read-Only Memory (PROM), an Erasable PROM (EPROM), registers, a hard disk, a removable disk, a CD-ROM, a DVD, or any other suitable storage device. In addition, machine-readable media may include a transmission line or a carrier wave that encodes a data signal. Those skilled in the art will recognize how best to implement the described functionality for the processing system 1202. According to one aspect of the disclosure, a machine-readable medium is a computer-readable medium encoded or stored with instructions and is a computing element, which defines structural and functional interrelationships between the instructions and the rest of the system, which permit the instructions' functionality to be realized. Instructions may be executable, for example, by a client device or server or by a processing system of a client device or server. Instructions can be, for example, a computer program including code.

An interface 1216 may be any type of interface and may reside between any of the components shown in FIG. 12. An interface 1216 may also be, for example, an interface to the outside world (e.g., an Internet network interface). A transceiver block 1207 may represent one or more transceivers, and each transceiver may include a receiver 1206 and a transmitter 1209. A functionality implemented in a processing system 1202 may be implemented in a portion of a receiver 1206, a portion of a transmitter 1209, a portion of a machine-readable medium 1210, a portion of a display 1212, a portion of a keypad 1214, or a portion of an interface 1216, and vice versa.

Referring back to FIGS. 2 through 5B and 8B, in one aspect of the disclosure, the agent module 322 may be configured to receive notification of events that occur at the server 204 from the OS module 324. For example, the OS module 324 may report certain events to the agent module 322 including when the client device 202 has logged onto the server 204, when an application is launched on the desktop, when a dialog box or new window is opened, when a textbox field is clicked, pointer movements, clicks (e.g., mouse clicks), and/or other events. To receive notification of events, the agent module 322 may register as an events handler with the OS module 324 to receive reports of certain events.

In one aspect of the disclosure, the agent module 322 may determine an action to be taken at the client device 202 based on the reported event. The agent module 322 may then generate a message based on the determined action and send the message to the client device 202 (e.g., via the server remote access module 334). For example, when the event is a click on a textbox, the agent module 322 may determine that a graphical keyboard is to be activated on the client device 202 and send a message to the client device 202 to activate the graphical keyboard 820a. At the client device 202, the local view module 540 receives the message from the agent module 322 and performs an action based on the received message, as discussed further below. In the above example, the local view module 540 may bring up the graphical keyboard 820a on the display 560 in response to the message.

Examples of events that may be reported to the agent module 322 and messages generated by the agent module 322 for the client device 202 based on the reported events are discussed further below.

In one aspect of the disclosure, the OS module 324 may report a click on a textbox to the agent module 322. This may occur, for example, when user inputs (e.g., pointer movements and a click) received from the client device 202 result in a textbox of the application 327 being clicked on. When this event occurs, the agent module 322 may determine that a graphical keyboard is to be activated on the client device 202 for the user at the client device 202 to enter text. The agent module 322 may then generate a message for the client device 202 including a command to bring up the graphical keyboard 820a on the display 560 of the client device 202, and send the message to the client device 202 (e.g., via the server remote access module 334).

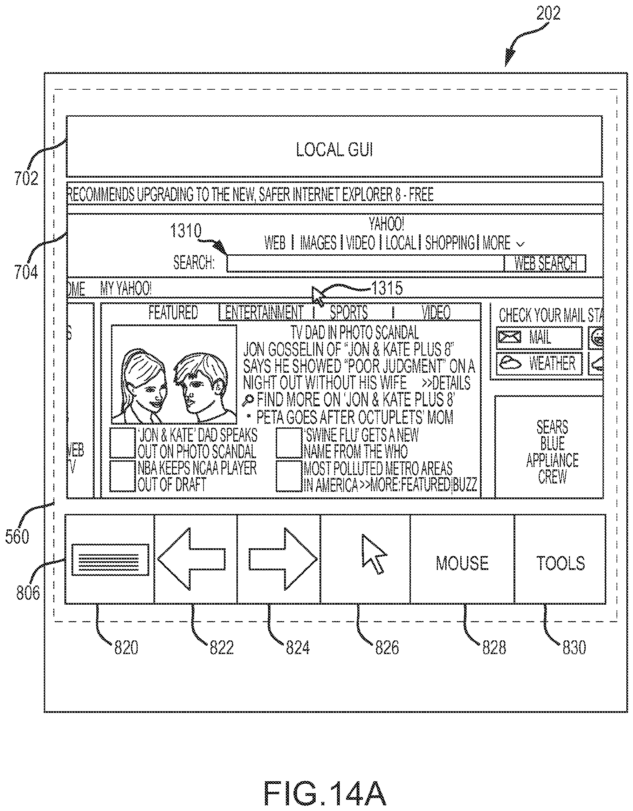

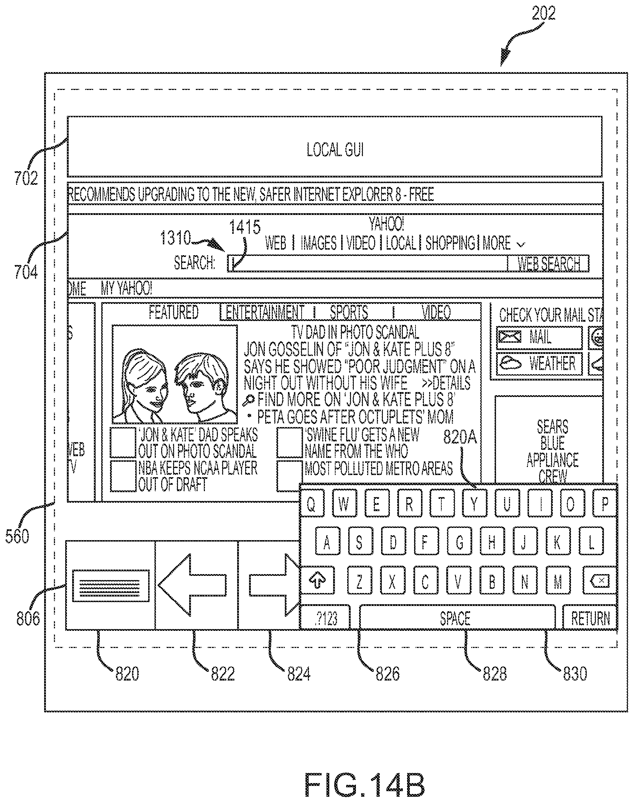

On the client side, the client remote access module 452 receives the message and sends the received message to the local view module 540. Upon reading the received message, the local view module 540 brings up the graphical keyboard 820a on the display 560 of the client device 202 to allow the user at the client device 202 to enter text. An example of this is illustrated in FIGS. 14A and 14B.

FIG. 14A shows a display 560 at the client device 202, in which the remote application view 704 displays a web page of a remote web browser application 327. The web page includes a textbox 1310 (e.g., search textbox). In this example, the user at the client device 202 inputs user inputs (e.g., pointer movements and clicks) using a touch screen or other pointer input device at the client device 202. The remote view module 535 sends the user inputs to the server 204 (e.g., via the client remote access module 452). On the server side, the application control module 325 controls the web browser application 327 based on the received user inputs. Updated display output data of the web browser application 327 in response to the user inputs are sent to the client device 202. On the client side, the remote view module 535 updates the image in the remote application view 704 based on the received updated display output data.

On the server side, if a received pointer movement and click result in a textbox being click on, then the OS module 324 reports this event to the agent module 322. The agent module 322 determines that a graphical keyboard 802a is to be activated at the client device 202 and generates a message for the client device 202 including a command to activate the graphical keyboard 820a. The agent module 322 then sends the message to the client device 202. On the client side, the local view module 540 receives the message and brings up the graphical keyboard 820a on the display 560 in response to the message. FIG. 14B shows the display 560 at the client device 202, in which the graphical keyboard 820a is brought up on the display 560 after the textbox 1310 has been click on. An I-beam 1415 or other type of cursor may appear in the textbox 1310 to indicate that text will be entered into the textbox 1310.

As the user at the client device 202 inputs text using the graphical keyboard 820a, the text inputs to the graphical keyboard 820a may be directed to the remote view module 535, for example, as if the user had entered the text using a physical keyboard. The remote view module 535 may then send the user text inputs to the server 204 (e.g., using a RDP/ICA or other remote access protocol). On the server side, the application control module 325 enters the received text into the textbox. Updated display output data showing the inputted text in the textbox is then sent back to the client device 202. In this aspect, when the user at the client device 202 hits the enter button on the graphical keyboard 820a after entering text, the local view module 540 may automatically deactivate the graphical keyboard 820a.

An advantage of this aspect is that the graphical keyboard 820a is automatically brought up on the display 560 when the textbox 1310 is clicked on without requiring the user at the client device 202 to hit the keyboard button 820. This is not possible in other approaches in which only display output data of the remote application 327 is sent to the client device 202. In these approaches, the client device 202 simply displays the display output of the remote application 327 and receives no information about when a textbox of the remote application is clicked on. By contrast, in the above aspect, the agent module 322 determines when the textbox has been clicked on and sends a message to the client device 202 to bring up the graphical keyboard 820a.

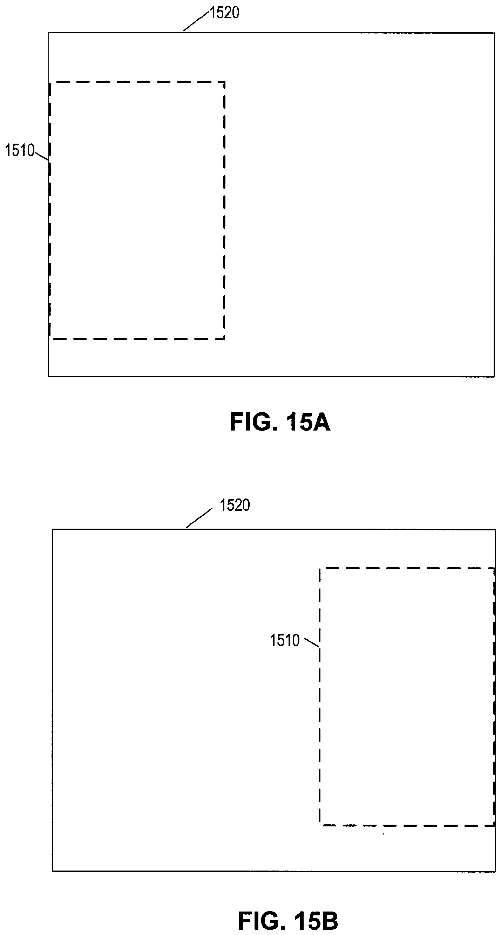

In one aspect, the local view module 540 keeps track of the area of the display output of the remote application 327 that is currently displayed in the remote application view 704. FIG. 15A shows an exemplary area 1510 of the display output 1520 that may be displayed in the remote application view 704. In this example, the total area of the display output 1520 may represent what a user at the server 204 might see on a large display at the server 204. In this example, the server 204 may send the entire display output of the remote application 327 to the client device 202, and the client device 202 may store the entire display output in a machine-readable medium (e.g., cache memory).

The local view module 540 may then allow the user to manipulate the area 1510 of the display output that is displayed in the remote application view 704. For example, the local view module 540 may allow the user to zoom in by moving two fingers away from each other on a touch screen 565 starting at a desired zoom in location. The local view module 540 may also include zoom in and zoom out buttons on the local GUI 702 and 706. The local view module 540 may also display scrollbars on the display 560 that allow the user to scroll (up, down, left, right) the area 1510 of the display output 1520 displayed in the remote application view 704. FIG. 15B shows an example in which the area 1510 of the display output 1520 displayed in the remote application view 704 has been scrolled to the right. In this aspect, the local view module 540 may send a command to the remote view module 535 specifying which area 1510 of the display output 1520 to display in the remote application view 704 based on inputs from the user. The command may include coordinates and dimensions of the area 1510 to be displayed in the remote application view 704.

As discussed further below, the local view module 540 may keep track of the area 1510 of the display output 1520 displayed in the remote application view 704 to determine whether the user at the client device 202 can view certain events (e.g., a dialog box popup) communicated to the local view module 540 by the agent module 322.

In one aspect of the disclosure, the OS module 324 may report to the agent module 322 when a dialog box and/or window opens as a result of user inputs (e.g., pointer movements and clicks) received from the client device 202. For example, a dialog box may open when a pointer is moved over an object (e.g., icon) and/or when a object is clicked on. The dialog box may display information to the user and/or request information from the user. For an example of a web browser application 327, a new browser window may open when the user clicks on a link.

When the OS module 324 reports that a dialog box and/or window has opened, the agent module 322 may determine that the dialog box and/or window is to be displayed to the user at the client device 202. In this aspect, the OS module 324 may also communicate the coordinates and dimensions of the dialog box or window to the agent module 322. The agent module 322 may then generate a message for the client device 202 including the coordinates and dimensions of the dialog box or window. The agent module 322 may then send the message to the client device 202 (e.g., via the server remote access module 334).

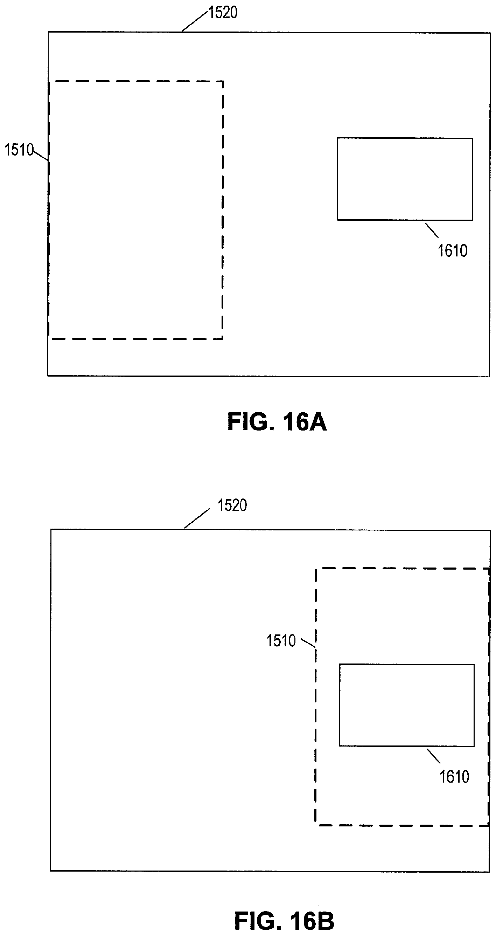

On the client side, the client remote access module 452 receives the message and sends the received message to the local view module 540. Upon reading the received message, the local view module 540 may determine whether the newly opened dialog box or window is currently shown in the remote application view 704. The local view module 540 may do this, for example, by comparing the coordinates and dimensions of the dialog box or window with the coordinates and dimensions of the area 1510 of the display output 1520 displayed in the remote application view 704. If the dialog box or window is not currently shown in the remote application view 704, then the local view module 540 may command the remote view module 535 to scroll and/or zoom out the remote application view 704 by a certain amount so that the dialog box or window is shown in the remote application view 704. The local view module 540 may determine the amount that the remote application view 704 needs to be scrolled and/or zoomed out based on differences between the coordinates and/or dimensions of the dialog box or window and the coordinates and/or dimensions of the area 1510 of the remote application view 704. An example of this is shown in FIGS. 16A and 16B.

FIG. 16A shows an example in which a dialog box or window 1610 opens outside the area 1510 of the remote application view 704. As a result, the user at the client device 202 cannot see the dialog box or window 1610. For example, the dialog box 1610 may require certain information (e.g., billing information) from the user to continue with a transaction (e.g., purchase). In this example, if the user cannot see the dialog box 1610 at the client device 202, then the user may be unaware that information is being requested.

In this example, the agent module 322 may send the coordinates and dimensions of the dialog box 1610 to the local view module 540 on the client side. The local view module 540 may then determine that the dialog box 1610 is not displayed in the remote application view 704. After making this determination, the local view module 540 may command the remote view module 535 to scroll the remote application view 704 so that the dialog box 1610 is shown in the remote application view 704. FIG. 16B shows an example in which the area 1510 of the remote application view 704 has been scrolled to the right so that the dialog box 1610 is shown in the remote application view 704. The local view module 540 may also command the remote view module 535 to zoom out the remote application view 704 so that the dialog box 1610 is shown in the remote application view 704. This advantageously allows the user at the client 204 to view the dialog box 1610 in order to receive information in the dialog box 1610 and/or enter information requested by the dialog box 1610.

In one aspect, the local view module 540 may notify the user at the client device 202 when a dialog box or window 1610 opens outside the area 1510 of the remote application view 704. In this aspect, the local view module 540 may display an arrow or other indicator on the display 560 indicating the direction of the dialog box or window 1610. The user may then choose whether to scroll the remote view application 704 in the indicated direction to view the dialog box or window 1610.

In one aspect, the OS module 324 may also report to the agent module 322 when the dialog box or window closes. For example, a dialog box may close when the user has entered information requested by the dialog box. In this aspect, the agent module 322 may send a message to the local view module 540 indicating that the dialog box or window has closed. The local view module 540 may then command the remote view module 535 to return the area 1510 of the remote application view 704 back to its original location before the dialog box or window was opened. In other words, the local view module 540 may undo the scrolling and/or zooming when the dialog box or window closes.

In one aspect, the OS module 324 may also report to the agent module 322 when a new web page is loaded in a web browser application 327. The agent module 322 may then send a message to the local view module 540 informing the local view module 540 that a new web page has been loaded. The local view module 540 may then command the remote view module 535 to zoom out the remote application view 704 to show substantially the entire display output 1520. This aspect automatically gives the user at the client device 202 an overview of content in the newly loaded web page. The user may then decide to zoom and/or scroll the remote application view 704 to focus on a desired portion of the new web page.

In one aspect, the OS module 324 may report the current coordinates (e.g., x-y coordinates) of the pointer to the agent module 322. The coordinates of the pointer may refer to coordinates of a pointer moved by the user at the client device 202 using a pointer input device or coordinates of a location where the user touches a display 560 at the client device 202 (e.g., using a touch screen overlaying the display 560). The agent module 322 may use the current coordinates of the pointer to determine whether the pointer is on an object (e.g., picture) in the application 327. The agent module 322 may do this, for example, by determining the coordinates and dimensions of objects in the application 327 and comparing the coordinates and dimensions of the objects with the reported coordinates of the pointer.

For an example of a web browser application 327, the agent module 322 may determine the coordinates (e.g., x-y coordinates) and dimensions (e.g., width and height) of objects (e.g., pictures, icons, animations, banners, etc.) in a web page by analyzing markup language code (e.g., HTML, XML, etc.) for the web page. The agent module 322 may receive the markup language code from the application control module 325. The markup language code for the web page may identify objects in the web page and their locations in the web page. The markup language code may also provide attributes for each object including object type (e.g., picture) and dimensions (e.g., height and width) of the object. The agent module 322 may use this information to determine the types of objects in the web page and the coordinates and dimensions of the objects in the web page. The agent module 322 may make this determination each time a new web page is loaded into the web browser application 327.

In this aspect, when the agent module 322 determines that the pointer is on an object in the application, then the agent module 322 may determine that substantially the entire object is to be displayed at the client device 202. The agent module 322 may then send a message to the client device 202 including information of the object. The information may include object type (e.g., picture) and the coordinates and dimensions of the object. On the client side, the local view module 540 may receive the coordinates and dimensions of the object and use the received coordinates and dimensions of the object to determine whether substantially the entire object is shown in the remote application view 704. The local view module 540 may do this, for example, by comparing the coordinates and dimensions of the object with the coordinates and dimensions of the area 1510 of the remote application view 704.

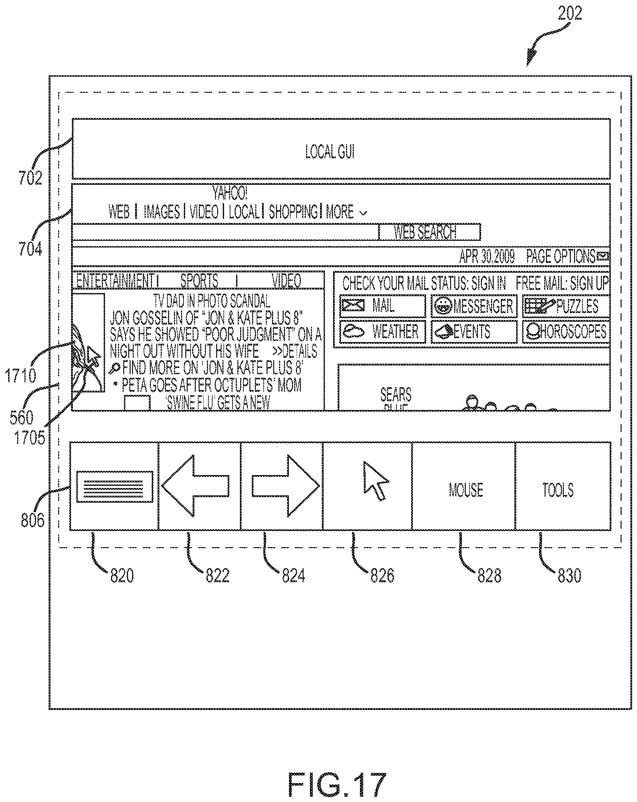

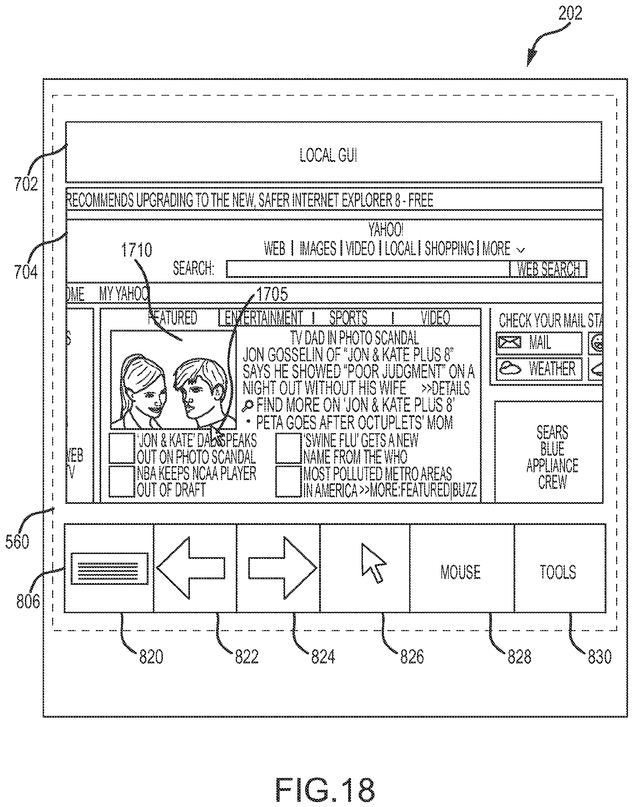

If the local view module 540 determines that substantially the entire object is not shown in the remote application view 704, then the local view module 540 may command the remote view module 535 to scroll and/or zoom the remote application view module 535 by a certain amount to show substantially the entire object. The local view module 540 may determine the amount based on differences between the coordinates and dimensions of the object and the coordinates and dimensions of the area 1510 of the remote application view 704. An example of this is illustrated in FIGS. 17 and 18.

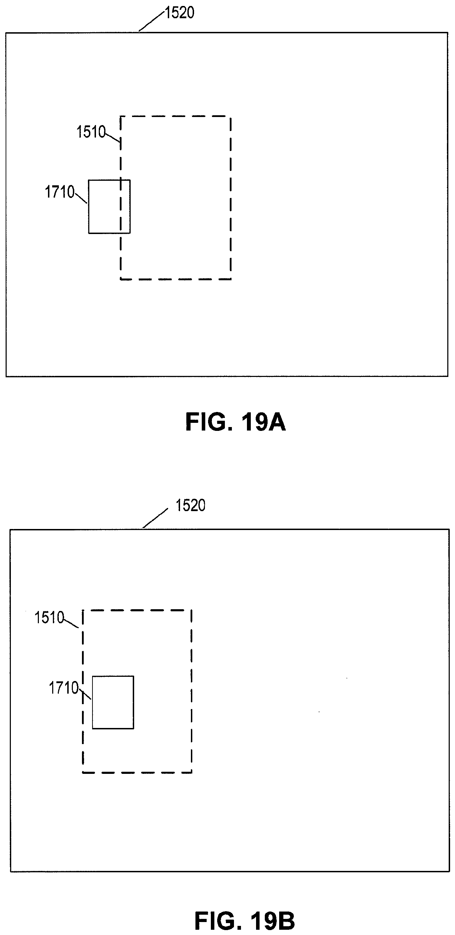

FIG. 17 shows an example of a display 560 at the client device 202, in which the remote application view 704 displays a web page on the remote web browser application 327. The web page includes an object 1710 (e.g., a picture). In this example, only a small portion of the object 1720 is shown in the remote application view 704 and a pointer 1705 is placed on the object 1710. FIG. 19A shows the portions of the object 1710 that are within and outside the area 1510 of the remote application view 704.

On the server side, the agent module 322 determines that the pointer 1705 is on the object 1720 based on the coordinates of the pointer reported from the OS module 324 and the coordinates and dimensions of objects in the web page. The agent module 322 then generates a message for the client device 202 including the coordinates and dimensions of the object 1710, and sends the message to the client device 202.

On the client side, the local view module 540 receives the message and determines whether substantially the entire object 1710 is shown in the remote application view 704. In this example, the local view module 540 determines that only a small portion of the object 1710 is shown in the remote application view 704. The local view module 540 then commands the remote view module 535 to scroll the remote application view 704 to the left so that substantially the entire object 1710 is shown the remote application view 704. FIG. 18 shows an example of the display 560 after the remote application view 704 has been scrolled to the left to show the entire object 1710 in the remote application view 704. FIG. 19B shows that, after scrolling to the left, the entire object 1710 is within the area 1510 of the remote application view 704.

In one aspect, the local view module 540 may also zoom in on the object 1710. For example, the local view module 540 may also command the remote view module 535 to zoom in on the object 1710 in the remote application view 704. For example, the local view module 540 may center the object 1710 in the remote application view 704 and maximize the size of the object 1710 in the remote application view 704.

An advantage of this aspect is that, when the user shows an interest in an object by moving a pointer to the object or touching the object using a touch screen, substantially the entire object is automatically shown in the remote application view 704. Thus, the user does not have to scroll and/or zoom out to see the rest of the object of interest.

In another example, the object 1710 may be a video. In this example, the video file for the object 1710 may be downloaded from a uniform resource locator (URL) and played using a media player application. The URL for the video file may be included in markup language code for a web page or other source.

In this example, the agent module 322 on the server side may determine when the pointer is on the object 1710 and/or clicks on the object 1710 based on coordinates of the pointer and/or pointer clicks reported from the OS module 324. The agent module 322 may then generate a message including the URL for the video file, and send the message to the client device 202.

On the client side, the local view module 540 receives the message, retrieves the URL for the video file from the message, and downloads the video file onto the client device 202 from the URL. In this example, the client remote access module 452 may establish a connection with the Internet or other network, and the local view module 540 may download the video file from the URL through the connection. After the video file is downloaded or while the video file is downloading, the local view module 540 may launch a local media player application on the client device 202 and play the video file using the local media player application. The local view module 540 may then display the output of the local media player application on the display 650. For example, the local view module 540 may display the output of the local view module 540 over the remote application view 704.

A process for establishing a remote session on the server 204 for a user at the client device 202 will now be discussed according to an aspect of the disclosure. When the user at the client device 202 desires to remotely access a remote server, the local view module 540 may display a plurality of remote servers from which the user can select on the display 560. For each available remote server, the client device 202 may store an address (e.g., IP address) and user credentials (e.g., login name and password) for the server. The user may then select one of the remote servers on the display 560, for example, using a touch screen overlaying the display 560.

When the user selects a remote server, the client remote access module 452 may initiate a remote access connection 525 with the server remote access module 334 of the server 204. To do this, the client remote access module 452 may send a request for remote access to the server 204 (e.g., over a TCP/IP network connection using an IP address of the server 204). The request may include user credentials (e.g., login name and password). If the user credentials are accepted, then the server remote access module 334 of the server 204 establishes a remote session for the client device 202, providing the client device 202 with remote access to the server 204.

In one aspect, the OS module 324 may notify the agent module 322 that a remote session has been established for the client device 202. The agent module 322 may then send a message to the client device 202, via the server remote access module 334, informing the client device 202 that the agent module 322 is active and ready to accept command messages from the client device 202. On the client side, the client remote access module 452 may send the message to the local view module 540. Upon receiving the message, the local view module 540 may send an acknowledgement to the server 204. On the server side, the server remote access module 334 may send the acknowledgement to the agent module 322. This process may be used to initialize communication between the agent module 322 and the local view module 540.

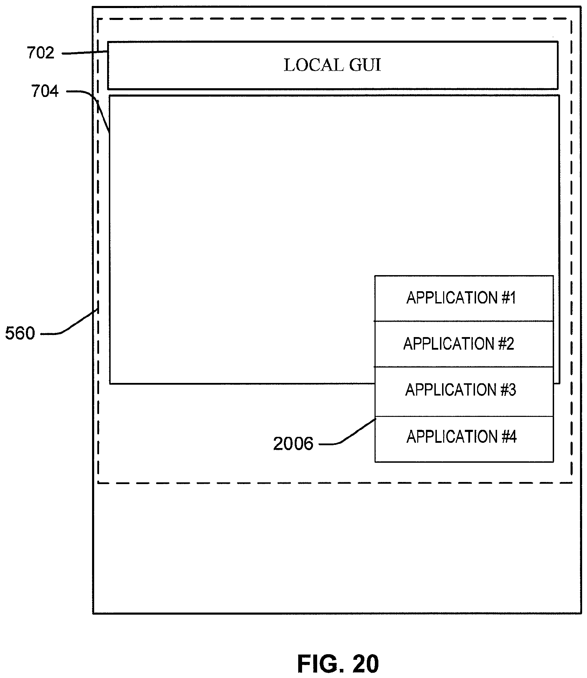

After initializing communication with the agent module 322, the local view module 540 may display a plurality of applications that are available on the server 204. The local view module 540 may display a list of the available applications in a menu on the display 560 and the user may select a desired one of the applications, for example, using a touch screen. FIG. 20 shows an example of a local GUI 2006 listing applications that are available on the server 204. The local GUI 2006 is locally generated and not generated from display output data from the server 204.

When the user selects an application, the local view module 540 may generate a command message identifying the selected application and send the command message to the server 204 via the client remote access module 452. On the server side, the server remote access module 334 may send the command to the agent module 322. The agent module 322 may then issue a command to the OS module 324 to launch the identified application 327 on the server 204. The agent module 322 may also command the application control module 325 to maximize the size of the display output of the application 327.

The server remote access module 334 may then send display output data of the application 327 to the client device 202. On the client side, the local view module 540 may display a local GUI 702 and 706 for the selected application on the display 560. The local view module 540 may also translate user inputs to the local GUI 702 and 706 into corresponding command messages and send the command message to the agent module 322, as discussed above.

In one aspect of the disclosure, the desktop module 328 may generate a desktop on the server 204. The desktop may include icons of available applications that can be selected and launched on the server 204. In one aspect, the desktop module 328 may be integrated with the operating system 330 (e.g., Windows-based operating system).

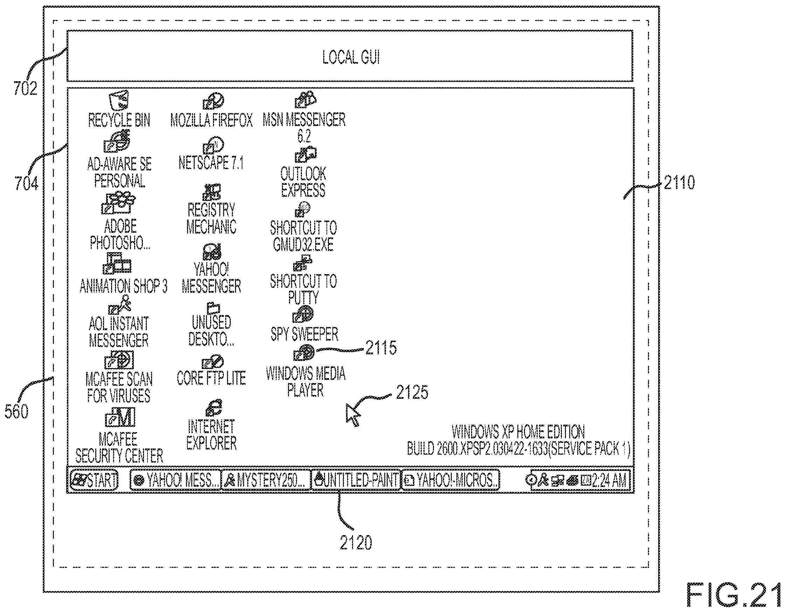

In this aspect, the server remote access module 334 may send display output data of the desktop to the client device 202. On the client side, the remote view module 535 may display the remote desktop in the remote application view 704 on the display 560. FIG. 21 shows an example of a remote desktop 2110 displayed in the remote application view 704 at the client device 202. The remote desktop 2110 includes icons 2115 of applications that can be launched on the server 204 and a taskbar 2120.

In this aspect, the user at the client device 202 may select an application on the remote desktop displayed in the remote application view 704, for example, by moving a pointer 2125 to the icon 2115 of a desired application and clicking on the icon 2115 using a pointer input device. The remote view module 535 may then send the entered user inputs (e.g., pointer movements and clicks) to the server 204. On the server side, the server remote access module 334 may input the received user inputs to the desktop module 328. When received user inputs to the desktop result in an application being launched on the server 204, the OS module 324 may inform the agent module 322. The agent module 322 may then generate a message identifying the launched application and send the message to the client device 202 (e.g., via the server remote access module 334).

On the client side, the client remote access module 452 may send the message to the local view module 540. The local view module 540 may then display a local GUI 702 and 706 for the identified application on the display 560. For example, the client device 202 may store configuration files for a plurality of local GUIs for different applications. The local view module 540 may then retrieve the configuration file 451 for the local GUI 702 and 706 corresponding to the application identified in the received message and generate the local GUI based on the retrieved configuration file 451. The local view module 540 may then display the local GUI 702 and 706 on the display 560 to allow the user to remotely control the application 327 on the server 204, as discussed above.

In this aspect, the local view module 540 may also generate a local GUI for the user at the client device 202 to control the remote desktop at the server 204. For example, the local GUI for the remote desktop may allow the user to select a background for the desktop, hide a taskbar of the desktop, and other functions. In another example, the local GUI for the remote desktop may allow the user to minimize, resize, hide and/or move a window for an application on the remote desktop. When the user enters user inputs to the local GUI for the remote desktop, then the local view module 540 may translate the user inputs into a command message for the remote desktop. For example, the local view module 540 may translate user inputs to a graphical control object (e.g., hide taskbar button) on the local GUI into a command message to hide the taskbar. The local view module 540 may send the command message to the server 204 via the client remote access module 452. On the server side, the server remote access module 334 may send the command message to the agent module 322. The agent module 322 may then issue a command to the desktop module 328 based on the received command message. For example, when the received command message is to hide the taskbar, then the agent module 322 may issue a command to the desktop module 328 to hide the taskbar.

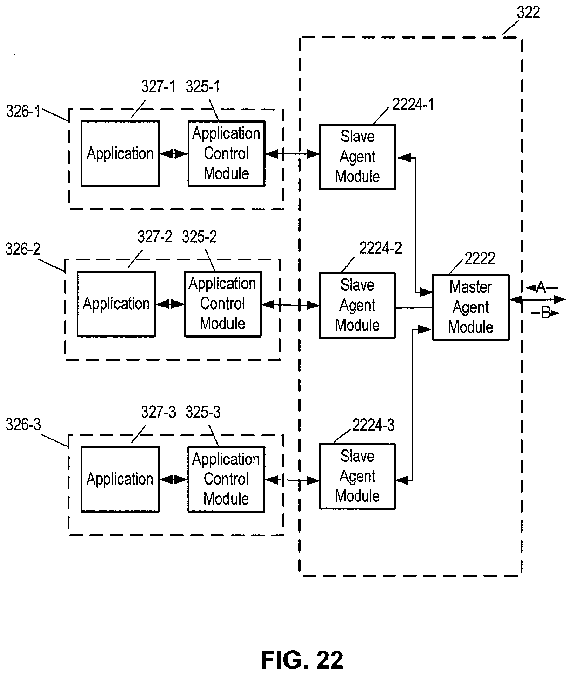

FIG. 22 is a conceptual block diagram of the agent module 322 according to an aspect of the disclosure. In this aspect, the agent module 322 comprising a master agent module 2222 and a plurality of slave agent modules 2224-1 to 2224-3. The agent module 322 may include any number of slave agent modules 2224-1 to 2224-3. In this aspect, each slave module agent 2224-1 to 2224-3 may be configured to control a particular application module 326-1 to 326-3 based on command messages from the client device 202. The master agent module 2222 may be configured to receive a command message from the client device 202 (via the server remote access module 334) and direct the command message to one of the slave agent modules 2224-1 to 2224-3.

In one aspect, there may be a number of applications 327-1 to 327-3 running on the server 204, in which each of the corresponding application modules 326-1 to 326-3 is controlled by one of the slave agent modules 2224-1 to 2224-2. In this aspect, the OS module 324 may notify the master agent module 2222 which one of the applications 327-1 to 327-3 is currently in focus on the server 204. For example, an application 327-2 to 327-3 may be in focus when an active pointer, cursor or I-beam appears in the window of the application 327-2 to 327-3. The master agent module 2222 may then direct command messages from the client device 202 to the slave agent module 2224-1 to 2224-3 corresponding to the application 327-1 to 327-3 currently in focus.

In one aspect, the user at the client device 202 may indicate which one of a plurality of applications 327-1 to 327-3 currently running on the server 204 he or she desires to access at a given time. For example, the local view module 540 may display a taskbar in the local GUI 702 and 704 indicating which application are currently running on the server 204. In this aspect, the OS module 324 may notify the master agent module 2222 which applications are running on the server 204 and the master agent may send a message to the client device 202 identifying these applications. The local view module 540 may then generate a local taskbar identifying these applications based on the message. When the user selects an application from the taskbar (e.g., using a touch screen), the local view module 540 may send a command message to the server 204 identifying the application.

On the server side, the server remote access module 334 may send the command message to the master agent module 2222. The master agent module 2222 may then send a command to the desktop module 328 to maximize the selected application and minimize or hide the other applications running on the server 204 so that the display output from the server 204 to the client device 202 only shows the selected application. The master agent module 2222 may then direct subsequent command messages from the client device 202 to the slave agent module 2224-1 to 224-3 corresponding to the selected application 327-1 to 327-3.

One approach for scrolling a remote application running on a remote server (e.g., a remote personal computer) is for a client device to scroll around the remote server's display to locate a window of the remote application, and separately scroll content around inside the window of the remote application. This may require separate scrolling of the remote application running on the server and the local application running on the client device using multiple user interactions to see a portion of the remote application of interest. Furthermore, the controls to scroll within the window on the remote server's display may be difficult to operate from the client device, such as when the client device is presented with a window of the remote application that is larger than a display memory buffer of the client device (e.g., the client device may not be able to view the entire window of the remote application). Another approach for scrolling a remote application is to limit the amount of scrolling that the user has access to due to the memory constraint and allow scrolling only through fixed and explicit commands from the user (e.g. instructing to scroll 20 pixels to the left and/or 45 pixels to the top).

For example, as illustrated in FIGS. 1B, 1C, 1D and 1E, if a user would like to scroll to a different area on the webpage displayed in the web browser application 120, the user may have to zoom out or move to the right in order to place the scrollbar of the web browser application 120 in sight. Then the user may have to use the scrollbar of the web browser application 120 to scroll down the webpage to place the other portions of the webpage in view. As shown in FIG. 1D, scrolling using the scrollbar of web browser application 120 may be difficult. The user may not see the entire content of the webpage and may have no idea how much to scroll by in order to locate a suitable portion of the webpage for viewing. Alternatively, the user may zoom out completely so that the entire web browser application 120 is in view and then utilize the same scrollbar of the web browser application 120 for scrolling while viewing the content of the webpage to determine how much to scroll. However, scrolling in this way may also be difficult. For example, if the client device 135 is a handheld device (e.g., a smartphone) which is used to view the web browser application 120 running on a server, then the scrollbar of the web browser application 120 may be too small for the user to see or utilize to scroll down on the webpage. These examples illustrate a fixed and unintuitive user experience that does not take advantage of the native scrolling gesture functionality of client device 135, which may be, for example, a mobile device like a smartphone. Scrolling according to the foregoing examples may require multiple scrolling gestures or control inputs to achieve one perceived goal (e.g. viewing a region of the remote application).

In one aspect of the disclosure, a configuration of the subject technology can handle the scroll graphical user interface (GUI) input or scrolling gesture on a client device, use a scrolling gesture native or appropriate to the client device, and scroll a remote application shown on both the client device and server so that one user control action can bring the desired region of the remote application into view. In one aspect of the disclosure, a configuration of the subject technology can include a more intuitive scrolling capability that is adaptive depending on the size of the content of the remote application running on the server, which may only require a single type of user input (e.g., a native scrolling gesture of the client device).

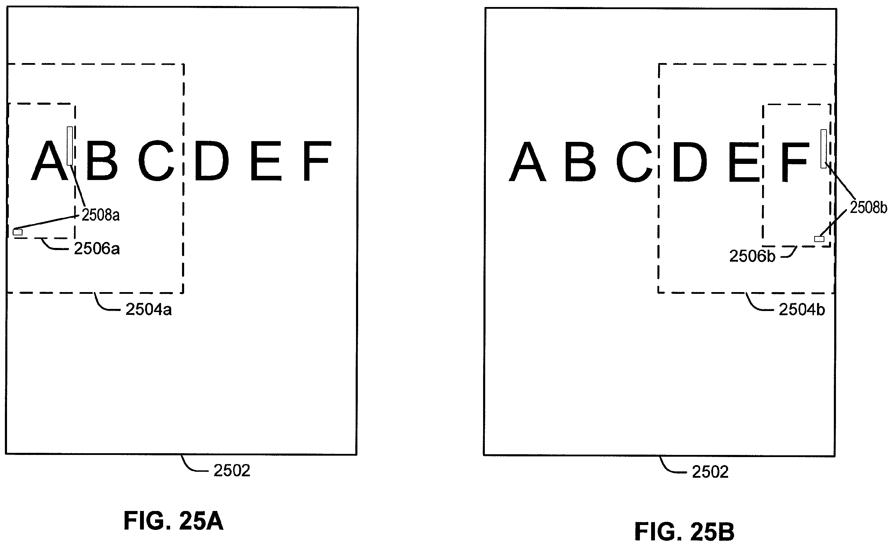

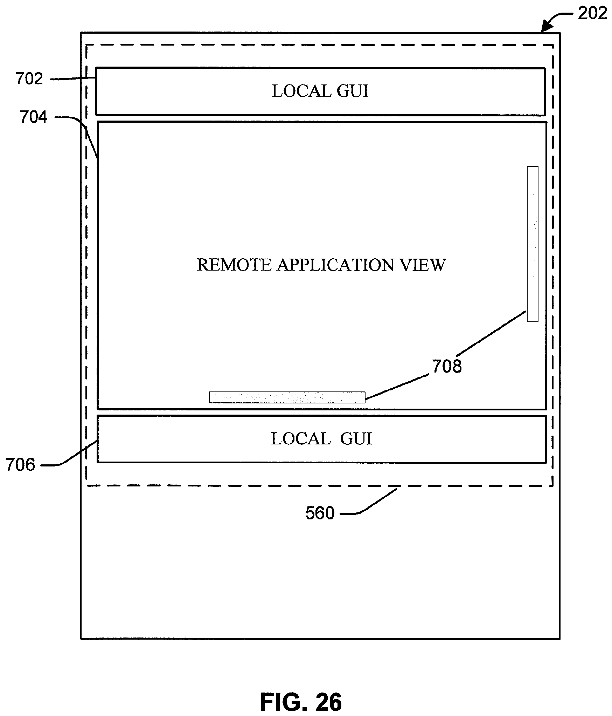

FIG. 25A illustrates exemplary views at a client device of a remote application running on a server, in accordance with various aspects of the present disclosure, while FIG. 26 illustrates a composite view at the client device (similar to FIG. 7) with adaptive scrollbars according to various aspects of the present disclosure. Referring to FIGS. 25A and 26, first remote application view 2506a is an example of what may be viewed on remote application view 704 of client device 202. First display output 2504a may provide the view (e.g., application window or browser wrapper) of the remote desktop or remote application 2502 running on the server. The remote view module of the client device may receive first display output 2504a from the server. In some aspects, first display output 2504a is stored on the client device such that the client device may view the remote desktop or remote application 2502 running on the server through the view provided by first display output 2504a.

For example, first remote application view 2506a may be scrolled or moved within first display output 2504a to provide any view of the remote desktop or remote application 2502 running on the server within the area defined by the outline of first display output 2504a. First remote application view 2506a may also be enlarged or maximized (i.e., zoom out) such that first remote application view 2506a provides the same view as provided by first display output 2504a.

Remote application 2502 maybe any application running on the server. For example, remote application 2502 may be a web browser, Microsoft® Word, Excel, PowerPoint or other applications. The remote application 2502 may have an overall content size that is represented by the outline of remote application 2502. For example, the overall content size may represent the size of a webpage for a web browser application, the size of a particular document for a Word application, the size of a particular spreadsheet for an Excel application, the size of a particular presentation for a PowerPoint application, or the size of a particular file for other applications. In some aspects, the size may indicate the amount of memory used to store and/or run the file for a particular application. In some aspects, the size may indicate the overall resolution or display area of a file when the file is displayed on a screen.

In some aspects, remote application 2502 may have an overall content size that is greater than what is displayed by either first overall display output 2504a or first remote application view 2506a. A client device or a server may not display the overall content size of a remote application 2502 because it may be more efficient in terms of memory and processing to load or display only portions of the remote application 2502 as opposed to the entire contents of the remote application 2502. For example, first display output 2504a may be drawn to a fixed memory buffer of the client device. In some aspects, the memory buffer of the client device is not large enough to load the overall content size of the remote application 2502. Still in some aspects, the overall content size of remote application 2502 may be less than or about equal to what is displayed by either first overall display output 2504a or first remote application view 2506a. This may occur, for instance, when a webpage has relatively little content to display, and as a result, a client device or server may load or display the entire webpage without having to scroll first display output 2504a to another portion of the remote application 2502 for viewing. Thus, in some aspects, first display output 2504a may comprise remote application 2502. In some aspects, first display output 2504a may comprise only a portion of remote application 2502.

Referring to FIGS. 5A, 5B, 25A and 25B, local view module 540 may receive, at client device 202 from server 204 over remote access connection 525 between client device 202 and server 204 during a remote connection session, an overall content size of a remote application 2502 running on server 204. In some aspects, the scrollable content of client device 202 may be dynamically updated depending on the content size of the remote application 2502. For example, application control module 325 may be configured to provide the overall content size of the remote application 2502 (running on server 204) to agent module 322. Application control module 325 may monitor remote application 2502 for one or more changes to the overall content size. If application control module 325 detects one or more changes to the overall content size, then application control module 325 may update the overall content size of the remote application 2502 reflecting the one or more changes. For example, application control module 325 may monitor an application 327 such as a web browser that is running on server 204. If application control module 325 detects one or more changes to the overall content size of the web browser (e.g., loading a new webpage which provides a different overall content size different from a previous webpage that was loaded), then application control module 325 may update the overall content size corresponding to the new webpage and provide the updated overall content size to agent module 322. The agent module 322 may then send, from server 204 to local view module 540 of client device 202 over remote access connection 525, the overall content size of remote application 2502.

In accordance with one aspect of the present disclosure, with knowledge of the overall content size of remote application 2502, client device 202 may be able to calculate the amount of scrolling for a remote application 2502 relative to the overall content size of the remote application 2502 as opposed to the size of first display output 2504a. In other words, scrolling commands may be adapted to the overall content size of remote application 2502, and not just what is capable of being displayed by first display output 2504a.

According to aspects of the present disclosure, a user may scroll through a remote application viewed on client device 202 using finger gestures or other appropriate scrolling gestures that are native to client device 202. For example, a user may scroll through a remote application via a finger gesture that is native to smartphones such as the iPhone, without having to scroll with the GUI of the remote application, which may be too small to be practically used as described above. The scrolling gestures may be collected by input device 565 and provided to local view module 540. Local view module 540 may then calculate the requested amount of scrolling based on the scrolling gestures. In some aspects, scrolling may comprise panning, zooming, moving or other ways of controlling a display area to view another portion of the display area. An example of scrolling a remote application 2502 is illustrated in FIGS. 25A and 25B. First remote application view 2506a of FIG. 25A currently displays the "A" of remote application 2502. A user may, for example, input scrolling gestures such that first remote application view 2506a is scrolled right towards the "F" of remote application 2502.

Local view module 540 may generate a scrolling command to control first remote application view 2506a at client device 202 of remote application 2502. In some aspects, a scrolling command may provide instructions on where to move the first remote application view 2506a with respect to the remote application 2502. For example, a scrolling command may comprise instructions regarding the number of pixels to move first remote application view 2506a in an X-direction (e.g., left or right), in a Y-direction (e.g., up or down), or both. The scrolling command may scroll the first remote application view 2506a to a new destination (e.g. a scrolling destination) with an updated view. The scrolling command may be based on one or more native scrolling gestures of the client device 202 or of a local application running on the client device 202. The scrolling command may also be based on first display output 2504a and the overall content size of the remote application 2502.

In generating the scrolling command, local view module 540 may determine the scrolling destination based on the scrolling gesture, in accordance with one aspect of the present disclosure. Local view module 540 may calculate the scrolling destination depending on a number of factors, including for example, the size or location of first remote application view 2506a, the relation of the size between the remote application view 2506a and first display output 2504a (e.g., zoom factor), the size or location of first display output 2504a, or the overall content size of remote application 2502. For example, if a user is zoomed in by a large factor, then a smaller number of pixels may be scrolled at a time as opposed to when the user is zoomed out, in which case, a larger number of pixels may be scrolled at a time.

In some aspects, if the scrolling destination is within first display output 2504a, then scrolling of the first remote application view 2506a may occur locally at client device 202 without having to send scrolling commands to the server. For example, scrolling of the first remote application view 2506a may occur locally at the client device 202 if the scrolling gesture of a user indicates a scroll to the right towards but not past "C" of remote application 2502.

In some aspects, if the scrolling destination is beyond the first display output 2504a, then the scrolling commands may be sent to server 204 in order to scroll the first display output 2504a to a new display output associated with the scrolling destination. For example, if the scrolling gesture of a user indicates a scroll from "A" to "F," then a new display output (e.g., second display output 2504b) may be needed. In some aspects, when a new display output is needed, local view module 540 may send the scrolling command from client device 202 to agent module 322 of server 204 over remote access connection 525. Agent module 322 may facilitate generating a local scrolling command based on the scrolling command received from local view module 540 (e.g., remote scrolling command).

In some aspects of the present disclosure, agent module 322 may translate the remote scrolling command to determine the new display output (i.e., new screen location) of application 327 (e.g., remote application 2502) running on server 204. The new display output may comprise the scrolling destination corresponding to the remote scrolling command (e.g., the new screen location may comprise a view of "F"). In other words, agent module 322 may determine the scrolling destination of application 327 corresponding to the remote scrolling command. Application control module 325 may then receive from agent module 322 the local scrolling command to control the display output of application 327. For example, agent module 322 may provide the scrolling destination of application 327 to application control module 325, which may then instruct application 327 to scroll to a new display output comprising the scrolling destination. Application control module 325 may then retrieve the new display output and send the new display output from server 204 to remote view module 535 of client device 202. Remote view module 535 may then provide a new remote application view (e.g., second remote application view 2506b) within the new display output (e.g., second display output 2504b) based on the scrolling gestures collected by user input module 550. For example, remote view module 535 may scroll second remote application view 2506b such that the view corresponds to the scrolling destination of the scrolling commands. The screen memory buffer of client device 202 may then be refreshed (e.g., sending second display output 2504b to display module 555 to facilitate displaying second remote application view 2506b). Thus, a user for example may be able to see the "F" on second remote application view 2506b after scrolling.

Referring to FIGS. 5A, 5B, 25A, 25B, and 26, remote application views (e.g., 2506a, 2506b and 704) may also comprise adaptive scrollbars (e.g., 2508a, 2508b, 708), in accordance with various aspects of the present disclosure. For example, the scrollbars may be adaptive to the overall content size of the remote application 2502 based on a size of the remote application view relative to the overall content size of the remote application 2502 and based on a position of the remote application view relative to the overall content size of the remote application 2502. As discussed above, local view module 540 of client device 202 may receive the overall content size of a remote application 2502 running on server 204. In some aspects, local view module 540 may provide the overall content size of remote application 2502 to a native application of client device 202 (e.g., a local operating system or other local application running on client device 202) such that when the native application generates scrollbars (e.g., native scrollbars), the size and position of the native scrollbars change relative to the overall content size of the remote application 2502 based on the size and the position of the remote application view.

For example, as the size of the remote application view grows larger (e.g., zoom out), the size of the scrollbars may correspondingly grow larger, thus indicating a less amount of scrolling needed to scroll to the boundaries of the remote application. Conversely, as the size of the remote application view grows smaller (e.g., zoom in), the size of the scrollbars may correspondingly grow smaller, thus indicating a larger amount of scrolling needed to scroll to the boundaries of the remote application. Local view module 540 may provide the overall content size of remote application 2502 to remote view module 535 such that remote view module 535 generates scrollbars that are relative to the overall content size based on the size and the position of the remote application view.

In some aspects, local view module 540 may generate the scrollbars such that the sizes of the scrollbars are relative to the overall content size of the remote application 2502 based on the size of the remote application view relative to the overall content size of the remote application and also based on the position of the remote application review relative to the overall content size of the remote application. For example, the scrollbars may be local GUI including graphical control objects for controlling certain functions of the remote application 2502, such as scrolling. In some aspects, the scrollbars (e.g., 2508a, 2508b, 708) are not generated at server 204. In other words, the scrollbars are not generated from the display output of a remote application 2502 running on server 204. For example, the scrollbars are not part of the remote application's GUI generated from the display output of the remote application 2502 running on server 204. Instead, the scrollbars are locally generated at the client device 202, for example, by local view module 540 or a native application of client device 202.

One approach may provide scrollbars based on a size and a position of an application view (e.g., 2506a or 2506b) relative to a display output (e.g., 2504a or 2504b). This may be misleading to the user because this approach does not actually convey to the user how much actual space within remote application 2502 that can be scrolled. Rather, the user may be misled into thinking that the extent of the scrollable space ends at the boundary of the display output. For example, as shown in FIG. 25A, a user may be misled into thinking that the scrollable space is limited by the boundary of display output 2504a if the scrollbars are provided based on a size and a position of remote application view 2506a relative to display output 2504a.

Still, another approach may rely on the scrollbars generated by the remote application running on the server for scrolling. That is, these scrollbars are produced based on a size and a position of display outputs (e.g., 2504a or 2504b) relative to the overall content size of the remote application, but not based on the size or the position of the remote application view relative to the overall content size of the remote application.

For example, as described above, FIG. 1D illustrates an example where a user may use the scrollbar generated by web browser application 120. The scrollbar here may indicate how much scrollable space is available based on the size and the position of the display output relative to web browser application 120 (but not based on the size and the position of a remote application view relative to web browser application 120). In other words, the size and the position of the scrollbar seen in FIG. 1D may still indicate the same amount of scrollable space available within web browser application 120 regardless of any changes to the size or the position of the remote application view. In such a case, the user may be confronted with difficulties in scrolling, as described above. For example, the user may not see the entire content of the webpage, and as a result, the user may have no idea how much to scroll by in order to locate a desired portion of the webpage for viewing. Although the user may zoom out for a larger view of the webpage using a native zooming gesture, it may be difficult to scroll using the scrollbar generated by web browser application 120 because it may be too small to be practically used by the user, especially if the scrollbar is displayed on a handheld client device.

According to aspects of the present disclosure, when the scrollbars are generated based on a size and a position of a remote application view relative to the overall content size of the remote application 2502, a user is provided with knowledge of how much actual space the user may scroll within remote application 2502. For example, as shown in FIG. 25A, a user may have knowledge based on the size and position of scrollbars 2508a that the scrollable space towards the right is not just limited to "A" "B" and "C," but rather beyond "C." In contrast, other approaches may only provide scrollbars which inform a user that the scrollable space towards the right is limited to an area not past "C." Furthermore, the scrollbars may be generated at the local client device to have a similar look and feel of a local application that is native to the client device (e.g., a web browser application running on a smartphone). This allows the user at the client device to scroll a remote application 2502 running on server 204 in a similar manner as a local application that is native to the client device, while enjoying the benefits of server-side computing such as increased computing power and resources available on server 204.

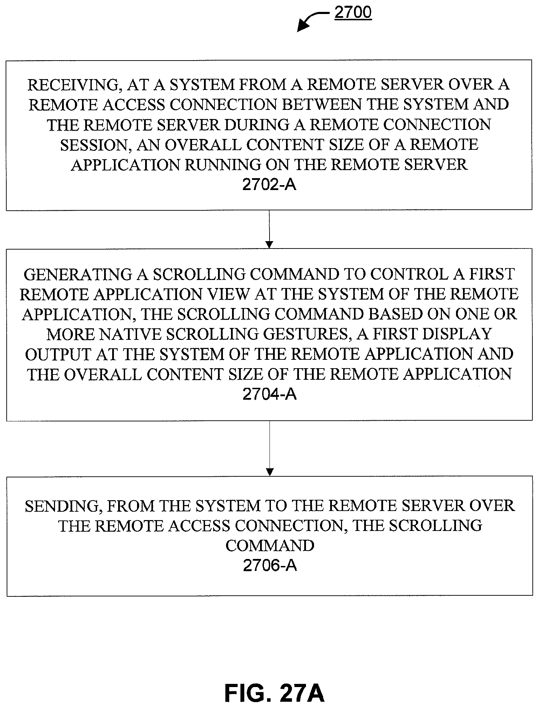

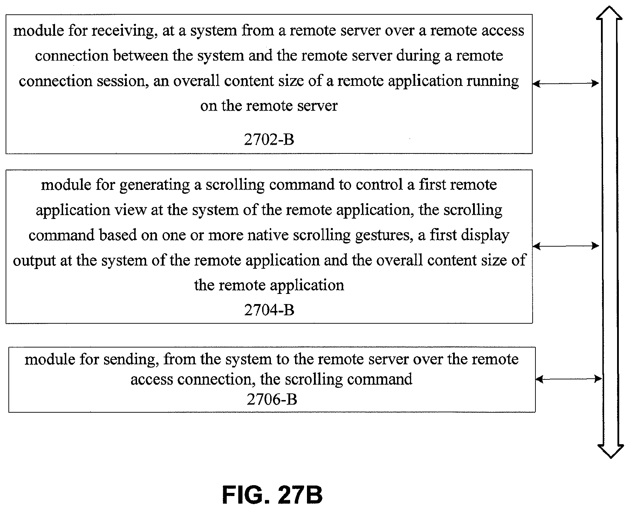

FIG. 27A illustrates an exemplary method 2700 for scrolling a remote application, in accordance with one aspect of the present disclosure. The method 2700 comprises receiving, at a system from a remote server over a remote access connection between the system and the remote server during a remote connection session, an overall content size of a remote application running on the remote server (2702-A). The method 2700 also comprises generating a scrolling command to control a first remote application view at the system of the remote application (2704-A). The scrolling command may be based on one or more native scrolling gestures, a first display output at the system of the remote application and the overall content size of the remote application. The method 2700 also comprises sending, from the system to the remote server over the remote access connection, the scrolling command (2706-A). In some aspects, the sending further comprises sending, from the system to the remote server over the remote access connection, the scrolling command if the scrolling command corresponds to a scrolling destination beyond the first display output.

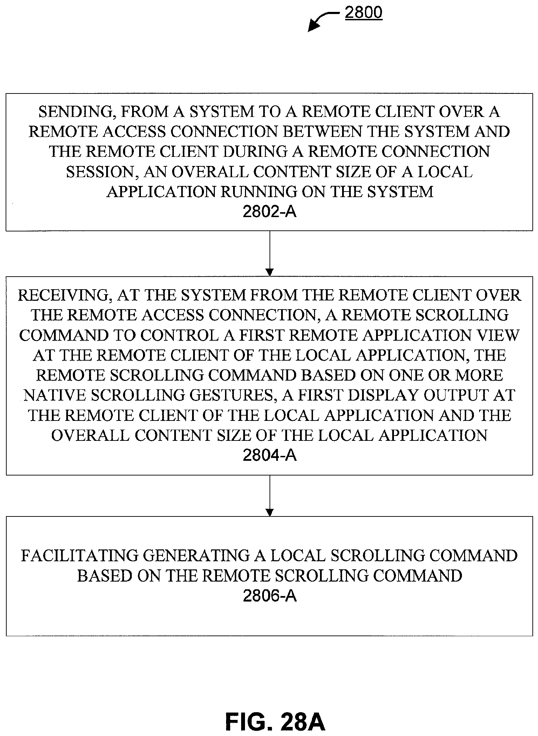

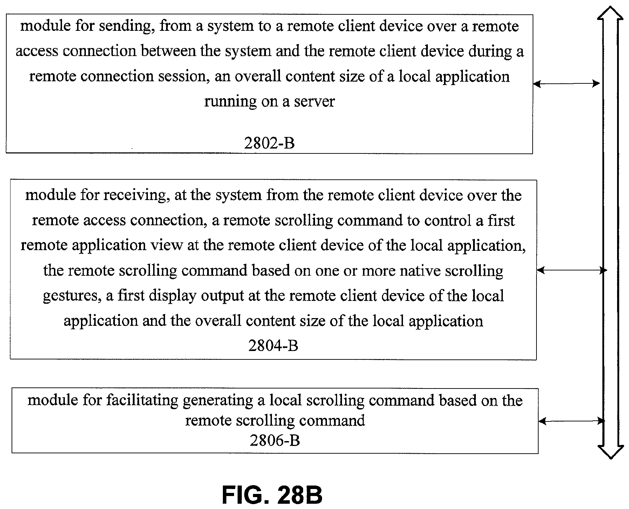

FIG. 28A illustrates another exemplary method 2800 for scrolling a remote application, in accordance with one aspect of the present disclosure. The method 2800 comprises sending, from a system to a remote client over a remote access connection between the system and the remote client during a remote connection session, an overall content size of a local application running on the system (2802-A). The method 2800 also comprises receiving, at the system from the remote client over the remote access connection, a remote scrolling command to control a first remote application view at the remote client of the local application (2804-A). The remote scrolling command may be based on one or more native scrolling gestures, a first display output at the remote client of the local application and the overall content size of the local application. The method 2800 also comprises facilitating generating a local scrolling command based on the remote scrolling command (2806-A). In some aspects, the facilitating comprises determining a scrolling destination of the local application corresponding to the remote scrolling command and providing the scrolling destination of the local application.

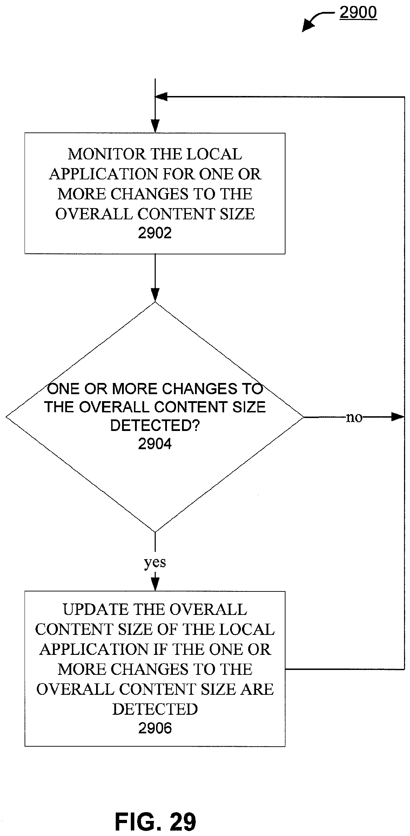

FIG. 29 illustrates an exemplary method 2900 for providing the overall content size of a local application running on a server, in accordance with one aspect of the present disclosure. For example, referring to FIGS. 5A and 5B, application control module 325 may provide the overall content size of application 327 to agent module 322. In some aspects, agent module 322 may subsequently send the overall content size of application 327 to client device 202 over remote access connection 525. The method 2900 comprises monitoring the local application (e.g., application 327) for one or more changes to the overall content size (2902). The method 2900 also comprises detecting one or more changes to the overall content size (2904). If no changes are detected, then the overall content size of the local application may continue to be monitored for one or more changes, according to one aspect of the present disclosure. The method 2900 also comprises updating the overall content size of the local application if the one or more changes to the overall content size are detected (2906). Thus, if changes are detected to the overall content size (e.g., when a new webpage or Excel document is loaded), then the overall content size may be updated, and the updated overall content size may be sent to the client device, in accordance with one aspect of the present disclosure.

Those of skill in the art would appreciate that the various illustrative blocks, modules, elements, components, methods, and algorithms described herein may be implemented as electronic hardware, computer software, or combinations of both.

For example, a module (e.g., an agent module 322, a viewer controller module 456, a local view module 540, a remote view module 535, or any other modules) may be implemented as electronic hardware, computer software, or combinations of both. In one aspect, a module(s) may be an apparatus since a module(s) may include instructions encoded or stored on a machine-readable medium, on another device, or on a portion thereof. In one aspect, a module(s) may be software (e.g., an application, a subroutine) stored in a machine-readable medium and executable by a processing system or a processor. In another aspect, a module(s) may be hardware (e.g., machine-readable medium encoded with instructions, a pre-programmed general-purpose computer, or a special purpose electronic or optical device).

Various modules may reside in one machine or in multiple machines. In one example, modules for the server side (e.g., an agent module, an application module, a server remote access module, etc.) may be located in one server or spread over multiple servers. In another example, modules for the client side (e.g., a client remote access module, a viewer controller module, a local view module, a remote view module, a display module, etc.) may be located in one client device or spread over multiple client devices.

In one aspect of the disclosure, when actions or functions are described as being performed by a module or a component (e.g., establishing, sending, receiving, providing, building, displaying, registering, encrypting, decrypting, authenticating, notifying, accepting, selecting, controlling, issuing, transmitting, reporting, pushing, or any other action or function), it is understood that such actions or functions are performed by the module or the component directly or indirectly. As an example, when a module is described as performing an action, it is understood that the module may perform the action directly or may perform the action indirectly, for example, by facilitating such an action. For instance, when a session is described as being established by a module, it is understood that the module may establish the session indirectly by facilitating an establishment of the session. As yet another example, when a view of an application is described as being displayed or rendered by a module, it is understood that the view may be displayed or rendered by the module either directly or indirectly.

To illustrate this interchangeability of hardware and software, various illustrative blocks, modules, elements, components, methods, and algorithms have been described above generally in terms of their functionality. Whether such functionality is implemented as hardware or software depends upon the particular application and design constraints imposed on the overall system. Skilled artisans may implement the described functionality in varying ways for each particular application.

Various components and blocks may be arranged differently (e.g., arranged in a different order, or partitioned in a different way) all without departing from the scope of the subject technology. In one aspect of the disclosure, the modules (or elements) recited in the accompanying claims may be performed by one module or by a smaller number of modules, and this arrangement is within the scope of the claims. In another aspect, the modules (or elements) recited in the accompanying claims may be performed by a larger number of modules, and this arrangement is within the scope of the claims. In yet another aspect, a module (or an element) recited in the accompanying claims may be performed by multiple modules, and this arrangement is within the scope of the claims. For example, a local view module and a remote view module may be combined into one module. A client remote access module, a local view module and a remote view module may be combined into one module. An agent module and a server remote access module may be combined into one module. In another example, these modules may be divided into a larger number of modules.

It is understood that the specific order or hierarchy of steps in the processes disclosed is an illustration of exemplary approaches. Based upon design preferences, it is understood that the specific order or hierarchy of steps in the processes may be rearranged. Some of the steps may be performed simultaneously. The accompanying method claims present elements of the various steps in a sample order, and are not meant to be limited to the specific order or hierarchy presented.

The previous description is provided to enable any person skilled in the art to practice the various aspects described herein. The previous description provides various examples of the subject technology, and the subject technology is not limited to these examples. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the invention.

A phrase such as an "aspect" does not imply that such aspect is essential to the subject technology or that such aspect applies to all configurations of the subject technology. A disclosure relating to an aspect may apply to all configurations, or one or more configurations. An aspect may provide one or more examples of the disclosure. A phrase such as an aspect may refer to one or more aspects and vice versa. A phrase such as an "embodiment" does not imply that such embodiment is essential to the subject technology or that such embodiment applies to all configurations of the subject technology. A disclosure relating to an embodiment may apply to all embodiments, or one or more embodiments. An embodiment may provide one or more examples of the disclosure. A phrase such an embodiment may refer to one or more embodiments and vice versa. A phrase such as a "configuration" does not imply that such configuration is essential to the subject technology or that such configuration applies to all configurations of the subject technology. A disclosure relating to a configuration may apply to all configurations, or one or more configurations. A configuration may provide one or more examples of the disclosure. A phrase such a configuration may refer to one or more configurations and vice versa.

The word "exemplary" is used herein to mean "serving as an example or illustration." Any aspect or design described herein as "exemplary" is not necessarily to be construed as preferred or advantageous over other aspects or designs.

All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

## Claims

1. A system for communication and for scrolling a remote application (2502), the system comprising:
a viewer controller module configured to receive, at the system from a remote server over a remote access connection between the system and the remote server during a remote connection session, an overall content size of a remote application (2502) running on the remote server, the viewer controller module further configured to generate a scrolling command to control a first remote application view (2506a) at the system of the remote application (2502), the scrolling command based on one or more native scrolling gestures, a first display output (2504a) at the system of the remote application (2502) and the overall content size of the remote application (2502), the viewer controller module further configured to send, from the system to the remote server over the remote access connection, the scrolling command,
wherein the remote application (2502) has a first boundary, the first display output (2504a) has a second boundary movable within the first boundary, and the first remote application view (2506a) has a third boundary movable only within the second boundary,
wherein the remote application (2502), the first display output (2504a) and the first remote application view (2506a) are distinct,
wherein the first boundary, the second boundary and the third boundary are distinct, and
wherein the viewer controller module is a local view module, the local view module configured to generate one or more scrollbars (2508) adaptive to the overall content size of the remote application (2502) and based on a size and a position of the first remote application view (2502a) relative to the overall content size of the remote application (2502).

2. The system of claim 1, wherein the viewer controller module comprises a remote view module
configured to receive, at the system from the remote server over the remote access connection, a second display output (2504b) of the remote application (2502), and provide a second remote application view (2506b) within the second display output (2504b) based on the one or more native scrolling gestures; and/or
configured to receive, at the system from the remote server over the remote access connection, the first display output (2504a) of the remote application (2502).

3. The system of claims 1 or 2, wherein the local view module is further
configured to provide the overall content size to a native application of the system such that one or more native scrollbars of the native application are adaptive to the overall content size of the remote application (2502) and based on a size and a position of the first remote application view (2506a) relative to the overall content size of the remote application (2502); and/or
configured to receive, at the system from the remote server over the remote access connection, the overall content size of the remote application (2502); and/or
configured to send, from the system to the remote server over the remote access connection, the scrolling command if the scrolling command corresponds to a scrolling destination beyond the first display output (2504a).

4. A method for communication and for scrolling a remote application (2502), the method comprising:
receiving, at a system from a remote server over a remote access connection between the system and the remote server during a remote connection session, an overall content size of a remote application (2502) running on the remote server;
generating a scrolling command to control a first remote application view (2506a) at the system of the remote application (2502), the scrolling command based on one or more native scrolling gestures, a first display output (2504a) at the system of the remote application (2502) and the overall content size of the remote application (2502); and
sending, from the system to the remote server over the remote access connection, the scrolling command,
wherein the remote application (2502) has a first boundary, the first display output (2504a) has a second boundary movable within the first boundary, and the first remote application view (2506a) has a third boundary movable only within the second boundary,
wherein the remote application (2502), the first display output (2504a) and the first remote application view (2506a) are distinct, and
wherein the first boundary, the second boundary and the third boundary are distinct,
said method further comprising:
generating one or more scrollbars (2508) adaptive to the overall content size of the remote application (2502) and based on a size and a position of the first remote application view (2506a) relative to the overall content size of the remote application (2502).

5. The method of claim 4, further comprising:
receiving, at the system from the remote server over the remote access connection, a second display output (2504b) of the remote application (2502); and
providing a second remote application view (2506b) within the second display output (2504b) based on the one or more native scrolling gestures.

6. The method of claims 4 or 5, further comprising providing the overall content size to a native application of the system such that one or more native scrollbars of the native application are adaptive to the overall content size of the remote application (2502) and based on a size and a position of the first remote application view (2506a) relative to the overall content size of the remote application (2502).

7. The method of any of claims 4-6, comprising sending, from the system to the remote server over the remote access connection, the scrolling command if the scrolling command corresponds to a scrolling destination beyond the first display output (2504a).

8. The method of claim any of claims 4-7, further comprising receiving, at the system from the remote server over the remote access connection, the first dis-play output (2504a) of the remote application (2502).

9. A machine-readable medium encoded with instructions executable by a processing system to perform a method for communication and for scrolling a remote application (2502), the instructions comprising code for:
receiving, at a system from a remote server over a remote access connection between the system and the remote server during a remote connection session, an overall content size of a remote application (2502) running on the remote server;
generating a scrolling command to control a first remote application view (2506a) at the system of the remote application (2502), the scrolling command based on one or more native scrolling gestures, a first display output (2504a) at the system of the remote application and the overall content size of the remote application (2502); and
sending, from the system to the remote server over the remote access connection, the scrolling command,
wherein the remote application (2502) has a first boundary, the first display output (2504a) has a second boundary movable within the first boundary, and the first remote application view (2506a) has a third boundary movable only within the second boundary,
wherein the remote application (2502), the first display output (2504a) and the first remote application view (2506a) are distinct, and
wherein the first boundary, the second boundary and the third boundary are distinct; and
generating one or more scrollbars (2508) adaptive to the overall content size of the remote application (2502) and based on a size and a position of the first remote application view (2506a) relative to the overall content size of the remote application (2502).

## Patentansprüche

1. System zur Kommunikation mit einer und zum Scrollen durch eine Remote-Anwendung (2502), wobei das System Folgendes umfasst:
ein Betrachtungssteuer- bzw. -regelmodul, das ausgestaltet ist, am System von einem Remote-Server über eine Remote-Zugriffsverbindung zwischen dem System und dem Remote-Server während einer Remote-Verbindungssitzung eine Gesamt-Inhaltsgröße einer Remote-Anwendung (2502) zu empfangen, die auf dem Remote-Server läuft, wobei das Betrachtungssteuer- bzw. -regelmodul überdies ausgestaltet ist, einen Scroll-Befehl zu erzeugen, eine erste Remote-Anwendungs-Ansicht (2506a) am System der Remote-Anwendung (2502) zu steuern bzw. regeln, wobei der Scroll-Befehl auf einer oder mehreren nativen Scroll-Gesten, einer erste Anzeige-Ausgabe (2504a) der Remote-Anwendung (2502) am System und der Gesamt-Inhaltsgröße der Remote-Anwendung (2502) basiert, wobei das Betrachtungssteuer- bzw. regelmodul überdies ausgestaltet ist, den Scroll-Befehl vom System über die Remote-Zugriffsverbindung an den Remote-Server zu senden,
wobei die Remote-Anwendung (2502) eine erste Grenze aufweist, die erste Anzeige-Ausgabe (2504a) eine zweite Grenze aufweist, die innerhalb der ersten Grenze beweglich ist, und die erste Remote-Anwendungs-Ansicht (2506a) eine dritte Grenze aufweist, die nur innerhalb der zweiten Grenze beweglich ist,
wobei die Remote-Anwendung (2502), die erste Anzeige-Ausgabe (2504a) und die erste Remote-Anwendungs-Ansicht (2506a) unterschiedlich sind,
wobei die erste Grenze, die zweite Grenze und die dritte Grenze unterschiedlich sind, und
wobei das Betrachtungssteuer- bzw. -regelmodul ein lokales Ansichtsmodul ist, wobei das lokale Ansichtsmodul ausgestaltet ist, eine oder mehrere Scrollleisten (2508) zu erzeugen, die anpassungsfähig an die Gesamt-Inhaltsgröße der Remote-Anwendung (2502) sind und auf einer Größe und einer Position der Remote-Anwendungs-Ansicht (2502a) relativ zur Gesamt-Inhaltsgröße der Remote-Anwendung (2502) basieren.

2. System nach Anspruch 1, wobei das Betrachtungssteuer- bzw. -regelmodul ein Remote-Ansichtsmodul umfasst,
das ausgestaltet ist, am System vom Remote-Server über die Remote-Zugriffsverbindung eine zweite Anzeige-Ausgabe (2504b) der Remote-Anwendung (2502) zu empfangen und basierend auf der einen oder mehreren Scroll-Gesten eine zweite Remote-Anwendungs-Ansicht (2506b) innerhalb der zweiten Anzeige-Ausgabe (2504b) bereitzustellen; und/oder
das ausgestaltet ist, am System vom Remote-Server über die Remote-Zugriffsverbindung die erste Anzeige-Ausgabe (2504a) der Remote-Anwendung (2502) zu empfangen.

3. System nach Anspruch 1 oder 2, wobei das lokale Ansichtsmodul überdies
ausgestaltet ist, die Gesamt-Inhaltsgröße für eine native Anwendung des Systems so bereitzustellen, dass eine oder mehrere native Scrollleisten der nativen Anwendung an die Gesamt-Inhaltsgröße der Remote-Anwendung (2502) anpassungsfähig sind und auf einer Größe oder einer Position der ersten Remote-Anwendungs-Ansicht (2506a) relativ zur Gesamt-Inhaltsgröße der Remote-Anwendung (2502) basieren; und/oder
ausgestaltet ist, am System vom Remote-Server über die Remote-Zugriffsverbindung die Gesamt-Inhaltsgröße der Remote-Anwendung (2502) zu empfangen; und/oder
ausgestaltet ist, den Scroll-Befehl vom System über die Remote-Zugriffsverbindung an den Remote-Server zu senden, wenn der Scroll-Befehl einem Scroll-Ziel entspricht, das sich außerhalb der ersten Anzeige-Ausgabe (2504a) befindet.

4. Verfahren für die Kommunikation mit einer und das Scrollen durch eine Remote-Anwendung (2502), wobei das Verfahren Folgendes umfasst:
Empfangen einer Gesamt-Inhaltsgröße einer Remote-Anwendung (2502), die auf dem Remote-Server läuft, an einem System von einem Remote-Server über eine Remote-Zugriffsverbindung zwischen dem System und dem Remote-Server während einer Remote-Verbindungssitzung;
Erzeugen eines Scroll-Befehls, um eine erste Remote-Anwendungs-Ansicht (2506a) der Remote-Anwendung (2502) am System zu steuern bzw. zu regeln, wobei der Scroll-Befehl auf einer oder mehreren nativen Scroll-Gesten, einer ersten Anzeige-Ausgabe (2504a) der Remote-Anwendung (2502) am System und der Gesamt-Inhaltsgröße der Remote-Anwendung (2502) basiert; und
Senden des Scroll-Befehls vom System über die Remote-Zugriffsverbindung an den Remote-Server,
wobei die Remote-Anwendung (2502) eine erste Grenze aufweist, die erste Anzeige-Ausgabe (2504a) eine zweite Grenze aufweist, die innerhalb der ersten Grenze beweglich ist, und die erste Remote-Anwendungs-Ansicht (2506a) eine dritte Grenze aufweist, die nur innerhalb der zweiten Grenze beweglich ist,
wobei die Remote-Anwendung (2502), die erste Anzeige-Ausgabe (2504a) und die erste Remote-Anwendungs-Ansicht (2506a) unterschiedlich sind, und
wobei die erste Grenze, die zweite Grenze und die dritte Grenze unterschiedlich sind,
das Verfahren umfasst überdies:
Erzeugen einer oder mehrerer Scrollleisten (2508), die an die Gesamt-Inhaltsgröße der Remote-Anwendung (2502) anpassungsfähig sind und auf einer Größe und einer Position der ersten Remote-Anwendungs-Ansicht (2506a) relativ zur Gesamt-Inhaltsgröße der Remote-Anwendung (2502) basieren.

5. Verfahren nach Anspruch 4, überdies umfassend:
Empfangen einer zweiten Anzeige-Ausgabe (2504b) der Remote-Anwendung (2502) am System vom Remote-Server über die Remote-Zugriffsverbindung; und
Bereitstellen einer zweiten Remote-Anwendungs-Ansicht (2506b) innerhalb der zweiten Anzeige-Ausgabe (2504b), basierend auf der einen oder mehreren nativen Scroll-Gesten.

6. Verfahren nach Anspruch 4 oder 5, überdies umfassend das Bereitstellen der Gesamt-Inhaltsgröße für eine native Anwendung des Systems, sodass eine oder mehrere native Scrollleisten der nativen Anwendung an die Gesamt-Inhaltsgröße der Remote-Anwendung (2502) anpassungsfähig sind und auf einer Größe und einer Position der ersten Remote-Anwendungs-Ansicht (2506a) relativ zur Gesamt-Inhaltsgröße der Remote-Anwendung (2502) basieren.

7. Verfahren nach einem der Ansprüche 4-6, umfassend das Senden des Scroll-Befehls vom System über die Remote-Zugriffsverbindung an den Remote-Server, wenn der Scroll-Befehl einem Scroll-Ziel entspricht, dass sich außerhalb der ersten Anzeige-Ausgabe (2504a) befindet.

8. Verfahren nach einem der Ansprüche 4-7, überdies umfassend das Empfangen der ersten Anzeige-Ausgabe (2504a) der Remote-Anwendung (2502) am System vom Remote-Server über die Remote-Zugriffsverbindung.

9. Ein maschinenlesbares Medium codiert mit Anweisungen, die vom Verarbeitungssystem ausführbar sind, um ein Verfahren zur Kommunikation mit einer und zum Scrollen durch eine Remote-Anwendung (2502) auszuführen, wobei die Anweisungen Code umfassen für:
Empfangen einer Gesamt-Inhaltsgröße einer Remote-Anwendung (2502), die auf dem Remote-Server läuft, an einem System von einem Remote-Server über eine Remote-Zugriffsverbindung zwischen dem System und dem Remote-Server während einer Remote-Verbindungssitzung;
Erzeugen eines Scroll-Befehls, um eine erste Remote-Anwendungs-Ansicht (2506a) der Remote-Anwendung (2502) am System zu steuern bzw. zu regeln wobei der Scroll-Befehl auf einer oder mehreren nativen Scroll-Gesten, einer ersten Anzeige-Ausgabe (2504a) der Remote-Anwendung am System und der Gesamt-Inhaltsgröße der Remote-Anwendung (2502) basiert; und
Senden des Scroll-Befehls vom System über die Remote-Zugriffsverbindung an den Remote-Server,
wobei die Remote-Anwendung (2502) eine erste Grenze aufweist, die erste Anzeige-Ausgabe (2504a) eine zweite Grenze aufweist, die innerhalb der ersten Grenze beweglich ist, und die erste Remote-Anwendungs-Ansicht (2506a) eine dritte Grenze aufweist, die nur innerhalb der zweiten Grenze beweglich ist,
wobei die Remote-Anwendung (2502), die erste Anzeige-Ausgabe (2504a) und die erste Remote-Anwendungs-Ansicht (2506a) unterschiedlich sind, und
wobei die erste Grenze, die zweite Grenze und die dritte Grenze unterschiedlich sind, und
Erzeugen einer oder mehrerer Scrollleisten (2508), die an die Gesamt-Inhaltsgröße der Remote-Anwendung (2502) anpassungsfähig sind und auf einer Größe und einer Position der ersten Remote-Anwendungs-Ansicht (2506a) relativ zur Gesamt-Inhaltsgröße der Remote-Anwendung (2502) basieren.

## Revendications

1. Système de communication et de défilement d'une application distante (2502), le système comprenant :
un module de commande de visualisation configuré pour recevoir, au système d'un serveur distant sur une connexion d'accès à distance entre le système et le serveur distant pendant une session de connexion à distance, une taille de contenu totale d'une application distante (2502) fonctionnant sur le serveur distant, le module de commande de visualisation configuré en outre pour générer une commande de défilement pour commander une première visualisation d'application distante (2506a) au système de l'application distante (2502), la commande de défilement basée sur un ou plusieurs gestes de défilement natifs, une première sortie d'affichage (2504a) au système de l'application distante (2502) et la taille de contenu totale de l'application distante (2502), le module de commande de visualisation configuré en outre pour envoyer, du système au serveur distant sur une connexion d'accès à distance, la commande de défilement,
dans lequel l'application distante (2502) a une première frontière, la première sortie d'affichage (2504a) a une deuxième frontière mobile à l'intérieur de la première frontière, et la première visualisation de l'application distante (2506a) a une troisième frontière mobile seulement à l'intérieur de la deuxième frontière,
dans lequel l'application distante (2502), la première sortie d'affichage (2504a) et la première visualisation de l'application distante (2506a) sont distinctes, dans lequel la première frontière, la deuxième frontière et la troisième frontière sont distinctes,
dans lequel le module de commande de visualisation est un module de visualisation local, le module de visualisation local configuré pour générer une ou plusieurs barres de défilement (2508) adaptatives à la taille de contenu totale de l'application distante (2502) et basé sur une taille et une position de la première visualisation d'application distante (2502a) par rapport à la taille de contenu totale de l'application distante (2502).

2. Système selon la revendication 1, dans lequel le module de commande de visualisation comprend un module de visualisation distant
configuré pour recevoir, au système du serveur distant sur la connexion d'accès à distance, une seconde sortie d'affichage (2504b) de l'application distante (2502), et fournir une seconde visualisation d'application distante (2506b) à l'intérieur de la seconde sortie d'affichage (2504b) basée sur les un ou plusieurs gestes de défilement natifs ; et/ou
configuré pour recevoir, au système du serveur distant sur la connexion d'accès à distance, la première sortie d'affichage (2504a) de l'application distante (2502).

3. Système selon les revendications 1 ou 2, dans lequel le module de visualisation local est en outre
configuré pour fournir la taille de contenu totale à une application native du système de sorte qu'une ou plusieurs barres de déroulement natives de l'application native sont adaptatives à la taille de contenu totale de l'application distante (2502) et basée sur une taille et une position de la première visualisation de l'application distante (2506a) par rapport à la taille de contenu totale de l'application distante (2502) ; et/ou
configuré pour recevoir, au système du serveur distant sur la connexion d'accès à distance, la taille de contenu totale de l'application distante (2502) ; et/ou
configuré pour envoyer, du système au serveur distant sur la connexion d'accès à distance, la commande de défilement si la commande de défilement correspond à une destination de défilement au-delà de la première sortie d'affichage (2504a).

4. Procédé de communication et de défilement d'une application distante (2502), le procédé consistant à :
recevoir, à un système d'un serveur distant sur une connexion d'accès à distance entre le système et le serveur distant pendant une session de connexion à distance, une taille de contenu totale d'une application distante (2502) exécutée sur le serveur distant ;
générer une commande de défilement pour commander une première visualisation d'application distante (2506a) au système de l'application distante (2502), la commande de défilement basée sur un ou plusieurs gestes de défilement natifs, une première sortie d'affichage (2504a) au système de l'application distante (2502) et la taille de contenu totale de l'application distante (2502) ; et
envoyer, du système au serveur distant sur la connexion d'accès à distance, la commande de défilement,
dans lequel l'application distante (2502) a une première frontière, la première sortie d'affichage (2504a) a une deuxième frontière mobile à l'intérieur de la première frontière, et la première visualisation de l'application distante (2506a) a une troisième frontière mobile seulement à l'intérieur de la deuxième frontière,
dans lequel l'application distante (2502), la première sortie d'affichage (2504a) et la première visualisation de l'application distante (2506a) sont distinctes, et dans lequel la première frontière, la deuxième frontière et la troisième frontière sont distinctes,
ledit procédé consistant en outre :
à générer une ou plusieurs barres de défilement (2508) adaptatives à la taille de contenu totale de l'application distante (2502) et basé sur une taille et une position de la première visualisation d'application distante (2506a) par rapport à la taille de contenu totale de l'application distante (2502).

5. Procédé selon la revendication 4, consistant en outre à :
recevoir, au système du serveur distant sur la connexion d'accès à distance, la première sortie d'affichage (2504b) de l'application distante (2502) ; et
fournir une seconde visualisation d'application distante (2506b) à l'intérieur de la seconde sortie d'affichage (2504b) basée sur les uns ou plusieurs gestes de défilement natifs.

6. Procédé selon les revendications 4 ou 5, comprenant en outre la fourniture de la taille de contenu totale à une application native du système de sorte qu'une ou plusieurs barres de déroulement natives de l'application native sont adaptatives à la taille de contenu totale de l'application distante (2502) et basée sur une taille et une position de la première visualisation de l'application distante (2506a) par rapport à la taille de contenu totale de l'application distante (2502).

7. Procédé selon l'une quelconque des revendications 4 à 6, comprenant l'envoi, du système au serveur distant sur la connexion d'accès à distance, de la commande de défilement si la commande de défilement correspond à une destination de défilement au-delà de la première sortie d'affichage (2504a).

8. Procédé selon l'une quelconque des revendications 4 à 7, comprenant en outre la réception, au système du serveur distant sur la connexion d'accès à distance, de la première sortie d'affichage (2504a) de l'application distante (2502).

9. Support lisible par machine codé avec des instructions exécutables par un système de traitement pour exécuter un procédé de communication et de défilement d'une application distante (2502), les instructions comprenant un code pour :
recevoir, à un système d'un serveur distant sur une connexion d'accès à distance entre le système et le serveur distant pendant une session de connexion à distance, une taille de contenu totale d'une application distante (2502) exécutée sur le serveur distant ;
générer une commande de défilement pour commander une première visualisation d'application distante (2506a) au système de l'application distante (2502), la commande de défilement basée sur un ou plusieurs gestes de défilement natifs, une première sortie d'affichage (2504a) au système de l'application distante et la taille de contenu totale de l'application distante (2502) ; et
envoyer, du système au serveur distant sur la connexion d'accès à distance, la commande de défilement,
dans lequel l'application distante (2502) a une première frontière, la première sortie d'affichage (2504a) a une deuxième frontière mobile à l'intérieur de la première frontière, et la première visualisation de l'application distante (2506a) a une troisième frontière mobile seulement à l'intérieur de la deuxième frontière,
dans lequel l'application distante (2502), la première sortie d'affichage (2504a) et la première visualisation de l'application distante (2506a) sont distinctes, et dans lequel la première frontière, la deuxième frontière et la troisième frontière sont distinctes ; et
générer une ou plusieurs barres de défilement (2508) adaptatives à la taille de contenu totale de l'application distante (2502) et basé sur une taille et une position de la première visualisation d'application distante (2506a) par rapport à la taille de contenu totale de l'application distante (2502).
